# EUROPEAN PATENT SPECIFICATION

(11) **EP 3 238 323 B1**
(45) Date of publication and mention of the grant of the patent: **07.08.2019**
(21) Application number: 15874273.4
(22) Date of filing: 22.12.2015
(51) Int. Cl.: H02J 7/02, H02J 50/90, H02J 50/80

(54) **METHOD FOR 3 DIMENSIONAL POCKET-FORMING**
VERFAHREN ZUR DREIDIMENSIONALEN TASCHENFORMUNG
PROCÉDÉ POUR LA FORMATION DE POCHES EN TROIS DIMENSIONS

(30) Priority: 27.12.2014 US 201414583643
(43) Date of publication of application: 01.11.2017
(73) Proprietor: Energous Corporation, San Jose CA 95134 (US)
(72) Inventor: LEABMAN, Michael, A., San Ramon, CA 94582 (US); BREWER, Gregory, Scott, Livermore, CA 94590 (US)
(74) Representative: Boult Wade Tennant LLP
(86) International application number: PCT/US2015/067250
(87) International publication number: WO 2016/106264

(56) References cited:
- US-A1- 2011 281 535
- US-A1- 2012 262 002
- US-A1- 2013 137 455
- US-A1- 2013 207 477
- US-A1- 2014 008 992
- US-A1- 2014 008 993
- US-A1- 2014 009 108
- US-A1- 2014 009 108
- US-A1- 2014 375 253
- US-B1- 6 967 462

## Description

### TECHNICAL FIELD

The present disclosure relates generally to wireless power transmission.

### BACKGROUND

Portable electronic devices such as smart phones, tablets, notebooks and other electronic devices have become an everyday need in the way we communicate and interact with others. The frequent use of these devices may require a significant amount of power, which may easily deplete the batteries attached to these devices. Therefore, a user is frequently needed to plug in the device to a power source, and recharge such device. This may require having to charge electronic equipment at least once a day, or in high-demand electronic devices more than once a day.

Such an activity may be tedious and may represent a burden to users. For example, a user may be required to carry chargers in case his electronic equipment is lacking power. In addition, users have to find available power sources to connect to. Lastly, users must plugin to a wall or other power supply to be able to charge his or her electronic device. However, such an activity may render electronic devices inoperable during charging.

Current solutions to this problem may include devices having rechargeable batteries. However, the aforementioned approach requires a user to carry around extra batteries, and also make sure that the extra set of batteries is charged. Solar-powered battery chargers are also known, however, solar cells are expensive, and a large array of solar cells may be required to charge a battery of any significant capacity. Other approaches involve a mat or pad that allows charging of a device without physically connecting a plug of the device to an electrical outlet, by using electromagnetic signals. In this case, the device still requires to be placed in a certain location for a period of time in order to be charged. Assuming a single source power transmission of electro-magnetic (EM) signal, an EM signal power gets reduced by a factor proportional to 1/r² over a distance r, in other words, it is attenuated proportional to the square of the distance. Thus, the received power at a large distance from the EM transmitter is a small fraction of the power transmitted. To increase the power of the received signal, the transmission power would have to be boosted. Assuming that the transmitted signal has an efficient reception at three centimeters from the EM transmitter, receiving the same signal power over a useful distance of three meters would entail boosting the transmitted power by 10,000 times. Such power transmission is wasteful, as most of the energy would be transmitted and not received by the intended devices, it could be hazardous to living tissue, it would most likely interfere with most electronic devices in the immediate vicinity, and it may be dissipated as heat.

In yet another approach such as directional power transmission such as US2013/0137455 or US2014/0009108, it would generally require knowing the location of the device to be able to point the signal in the right direction to enhance the power transmission efficiency. However, even when the device is located, efficient transmission is not guaranteed due to reflections and interference of objects in the path or vicinity of the receiving device. In addition, in many use cases the device is not stationary, which is an added difficulty.

For the foregoing reasons, there is a need for a wireless power transmission system where electronic devices may be powered without requiring extra chargers or plugs, and where the mobility and portability of electronic devices may not be compromised. Therefore, a wireless power transmission method solving the aforementioned problems is desired.

### SUMMARY

The embodiments described herein include a transmitter that transmits a power transmission signal (e.g., radio frequency (RF) signal waves) to create a three-dimensional pocket of energy. At least one receiver can be connected to or integrated into electronic devices and receive power from the pocket of energy. The transmitter can locate the at least one receiver in a three-dimensional space using a communication medium (e.g., Bluetooth technology). The transmitter generates a waveform to create a pocket of energy around each of the at least one receiver. The transmitter uses an algorithm to direct, focus, and control the waveform in three dimensions. The receiver can convert the transmission signals (e.g., RF signals) into electricity for powering an electronic device and/or for charging a battery. Accordingly, the embodiments for wireless power transmission can allow powering and charging a plurality of electrical devices without wires.

In one embodiment, a method of forming a pocket of energy, the method comprises capturing, by a transmitter, a first signal from a receiver, wherein the first signal is captured by a first subset of antennas of the transmitter; transmitting, by the transmitter, one or more power transmission waves to the receiver based on data contained in the first signal, wherein the one or more power transmission waves are transmitted using the first subset of antennas; capturing, by the transmitter, a second signal from the receiver, wherein the second signal is captured by a second subset of antennas of the transmitter; and transmitting, by the transmitter, the one or more power transmission waves to form a pocket of energy at a location relative to the receiver based on the first and second signals, wherein the transmitter continuously adjusts the first subset of antennas and the second subset of antennas to form the pocket of energy at the location relative to the receiver.

In another embodiment, a system for three-dimensional pocket-forming in wireless power transmission, the system comprises a transmitter comprising an array of one or more antennas configured to transmit one or more power transmission waves, and a microprocessor configured to control the array of antennas to form a pocket of energy using the one or more power transmission waves; a receiver comprising one or more antennas configured to receive energy from a pocket of energy generated by transmitter, and a communications antenna transmitting one or more communications signals, wherein the receiver is associated with an electronic device receiving an electrical charge from the receiver, wherein the array of antennas of the transmitter contains a first subset of one or more antennas configured to capture a first signal generated by the receiver; wherein the array of antennas of the transmitter contains a second subset of one or more antennas configured to capture a second signal generated by the receiver; and wherein the microprocessor is further configured to adjust the first subset of antennas and the second subset of antennas to transmit the pocket of energy to the receiver.

In yet another embodiment, an apparatus for three-dimensional pocket-forming in wireless power transmission, the apparatus comprises a receiver connected to an electronic device configured for communicating with a transmitter by generating first and second signals representative of horizontal and vertical orientation or values in a spherical system; and a first and second subset of antenna elements configured for capturing the horizontal and vertical values of the receiver for the microprocessor to calculate the corresponding values of the phase and gain for the vertical and horizontal antenna elements used to capture the signals and used by the microprocessor to adjust antenna elements of the transmitter for forming a pocket of energy used by the receiver to power the electronic device.

Additional features and advantages of an embodiment will be set forth in the description which follows, and in part will be apparent from the description. The objectives and other advantages of the invention will be realized and attained by the structure particularly pointed out in the exemplary embodiments in the written description and claims hereof as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

The present disclosure can be better understood by referring to the following figures. The components in the figures are not necessarily to scale, emphasis instead being placed upon illustrating the principles of the disclosure. In the figures, reference numerals designate corresponding parts throughout the different views. Non-limiting embodiments of the present disclosure are described by way of example with reference to the accompanying figures, which are schematic and are not intended to be drawn to scale. Unless indicated as representing the background art, the figures represent aspects of the disclosure.
**FIG. 1** illustrates a system overview, according to an exemplary embodiment.
**FIG. 2** illustrates steps of wireless power transmission, according to an exemplary embodiment.
**FIG. 3** illustrates an architecture for wireless power transmission, according to an exemplary embodiment.
**FIG. 4** illustrates components of a system of wireless power transmission using pocket-forming procedures, according to an exemplary embodiment.
**FIG. 5** illustrates steps of powering a plurality of receiver devices, according to an exemplary embodiment.
**FIG. 6A** illustrates waveforms for wireless power transmission with selective range, which may get unified in single waveform.
**FIG. 6B** illustrates waveforms for wireless power transmission with selective range, which may get unified in single waveform.
**FIG. 7** illustrates wireless power transmission with selective range, where a plurality of pockets of energy may be generated along various radii from transmitter.
**FIG. 8** illustrates wireless power transmission with selective range, where a plurality of pockets of energy may be generated along various radii from transmitter.
**FIGS. 9A** and **9B** illustrate a diagram of an architecture for wirelessly charging client computing platform, according to an exemplary embodiment
**FIG. 10A** illustrates wireless power transmission using multiple pocket-forming, according to an exemplary embodiment.
**FIG. 10B** illustrates multiple adaptive pocket-forming, according to an exemplary embodiment.
**FIG. 11** illustrates a diagram of a system architecture for wirelessly charging client devices, according to an exemplary embodiment.
**FIG. 12** illustrates a method for determining receiver location using antenna element, according to an exemplary embodiment.
**FIG. 13A** illustrates an array subset configuration, according to an exemplary embodiment.
**FIG. 13B** illustrates an array subset configuration, according to an exemplary embodiment.
**FIG. 14** illustrates a flat transmitter, according to an exemplary embodiment.
**FIG. 15A** illustrates a transmitter, according to an exemplary embodiment.
**FIG. 15B** illustrates a box transmitter, according to an exemplary embodiment.
**FIG. 16** illustrates a diagram of an architecture for incorporating transmitter into different devices, according to an exemplary embodiment.
**FIG. 17** illustrates a transmitter configuration according to an exemplary embodiment.
**FIG. 18A** illustrates multiple rectifiers connected in parallel to an antenna element, according to an exemplary embodiment.
**FIG. 18B** illustrates multiple antenna elements connected in parallel to a rectifier, according to an exemplary embodiment.
**FIG. 19A** illustrates multiple antenna elements outputs combined and connected to parallel rectifiers, according to an exemplary embodiment.
**FIG. 19B** illustrates groups of antenna elements connected to different rectifiers, according to an exemplary embodiment.
**FIG. 20A** illustrates a device with an embedded receiver, according to an exemplary embodiment.
**FIG. 20B** illustrates a battery with an embedded receiver, according to an exemplary embodiment.
**FIG. 20C** illustrates external hardware that may be attached to a device, according to an exemplary embodiment.
**FIG. 21A** illustrates hardware in the form of case, according to an exemplary embodiment.
**FIG. 21B** illustrates hardware in the form of a printed film or flexible printed circuit board, according to an exemplary embodiment.
**FIG. 22** illustrates internal hardware according to an exemplary embodiment.

### DETAILED DESCRIPTION

The present disclosure is here described in detail with reference to embodiments illustrated in the drawings, which form a part here. Other embodiments may be used and/or other changes may be made without departing from the spirit or scope of the present disclosure. The illustrative embodiments described in the detailed description are not meant to be limiting of the subject matter presented here. Furthermore, the various components and embodiments described herein may be combined to form additional embodiments not expressly described, without departing from the spirit or scope of the invention.

Reference will now be made to the exemplary embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to one skilled in the relevant art and having possession of this disclosure, are to be considered within the scope of the invention.

### I. SYSTEMS AND METHODS FOR WIRELESS POWER TRANSMISSIONS

### A. Components System Embodiment

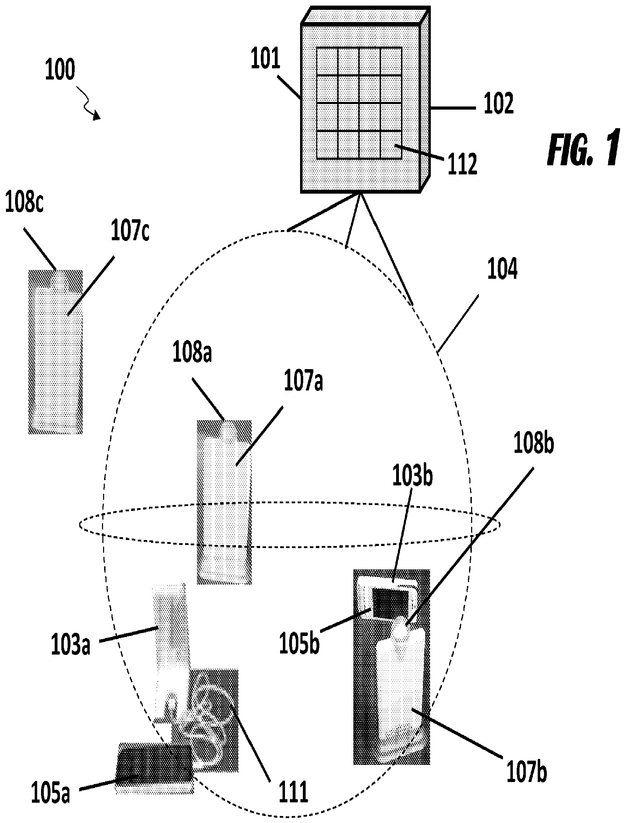

**FIG. 1** shows a system **100** for wireless power transmission by forming pockets of energy **104.** The system **100** may comprise transmitters **101,** receivers **103,** client devices **105,** and pocket detectors **107.** Transmitters **101** may transmit power transmission signals comprising power transmission waves, which may be captured by receivers **103.** The receivers **103** may comprise antennas, antenna elements, and other circuitry (detailed later), which may convert the captured waves into a useable source of electrical energy on behalf of client devices **105** associated with the receivers **103.** In some embodiments, transmitters **101** may transmit power transmission signals, made up of power transmission waves, in one or more trajectories by manipulating the phase, gain, and/or other waveform features of the power transmission waves, and/or by selecting different transmit antennas. In such embodiments, the transmitters **101** may manipulate the trajectories of the power transmission signals so that the underlying power transmission waves converge at a location in space, resulting in certain forms of interference. One type of interference generated at the convergence of the power transmission waves, "constructive interference," may be a field of energy caused by the convergence of the power transmission waves such that they add together and strengthen the energy concentrated at that location - in contrast to adding together in a way to subtract from each other and diminish the energy concentrated at that location, which is called "destructive interference". The accumulation of sufficient energy at the constructive interference may establish a field of energy, or "pocket of energy" **104,** which may be harvested by the antennas of a receiver **103,** provided the antennas are configured to operate on the frequency of the power transmission signals. Accordingly, the power transmission waves establish pockets of energy **104** at the location in space where the receivers **103** may receive, harvest, and convert the power transmission waves into useable electrical energy, which may power or charge associated electrical client devices **105.** Detectors **107** may be devices comprising a receiver **103** that are capable of producing a notification or alert in response to receiving power transmission signals. As an example, a user searching for the optimal placement of a receiver **103** to charge the user's client device **105** may use a detector **107** that comprises an LED light **108,** which may brighten when the detector **107** captures the power transmission signals from a single beam or a pocket of energy **104.**

### 1. Transmitters

The transmitter **101** may transmit or broadcast power transmission signals to a receiver **103** associated with a device **105.** Although several of the embodiments mentioned below describe the power transmission signals as radio frequency (RF) waves, it should be appreciated that the power transmission may be physical media that is capable of being propagated through space, and that is capable of being converted into a source of electrical energy **103.** The transmitter **101** may transmit the power transmission signals as a single beam directed at the receivers **103.** In some cases, one or more transmitters **101** may transmit a plurality of power transmission signals that are propagated in a multiple directions and may deflect off of physical obstructions (e.g., walls). The plurality of power transmission signals may converge at a location in a three-dimensional space, forming a pocket of energy **104.** Receivers **103** within the boundaries of an energy pocket **104** may capture and covert the power transmission signals into a useable source of energy. The transmitter **101** may control pocket-forming based on phase and/or relative amplitude adjustments of power transmission signals, to form constructive interference patterns.

Although the exemplary embodiment recites the use of RF wave transmission techniques, the wireless charging techniques should not be limited to RF wave transmission techniques. Rather, it should be appreciated that possible wireless charging techniques may include any number of alternative or additional techniques for transmitting energy to a receiver converting the transmitted energy to electrical power. Non-limiting exemplary transmission techniques for energy that can be converted by a receiving device into electrical power may include: ultrasound, microwave, resonant and inductive magnetic fields, laser light, infrared, or other forms of electromagnetic energy. In the case of ultrasound, for example, one or more transducer elements may be disposed so as to form a transducer array that transmits ultrasound waves toward a receiving device that receives the ultrasound waves and converts them to electrical power. In the case of resonant or inductive magnetic fields, magnetic fields are created in a transmitter coil and converted by a receiver coil into electrical power. In addition, although the exemplary transmitter **101** is shown as a single unit comprising potentially multiple transmitters (transmit array), both for RF transmission of power and for other power transmission methods mentioned in this paragraph, the transmit arrays can comprise multiple transmitters that are physically spread around a room rather than being in a compact regular structure.

The transmitter includes an antenna array where the antennas are used for sending the power transmission signal. Each antenna sends power transmission waves where the transmitter applies a different phase and amplitude to the signal transmitted from different antennas. Similar to the formation of pockets of energy, the transmitter can form a phased array of delayed versions of the signal to be transmitted, then applies different amplitudes to the delayed versions of the signal, and then sends the signals from appropriate antennas. For a sinusoidal waveform, such as an RF signal, ultrasound, microwave, or others, delaying the signal is similar to applying a phase shift to the signal.

### 2. Pockets of Energy

A pocket of energy **104** may be formed at locations of constructive interference patterns of power transmission signals transmitted by the transmitter **101.** The pockets of energy **104** may manifest as a three-dimensional field where energy may be harvested by receivers **103** located within the pocket of energy **104.** The pocket of energy **104** produced by transmitters **101** during pocket-forming may be harvested by a receiver **103,** converted to an electrical charge, and then provided to electronic client device **105** associated with the receiver **103** (e.g., laptop computer, smartphone, rechargeable battery). In some embodiments, there may be multiple transmitters **101** and/or multiple receivers **103** powering various client devices **105.** In some embodiments, adaptive pocket-forming may adjust transmission of the power transmission signals in order to regulate power levels and/or identify movement of the devices **105.**

### 3. Receivers

A receiver **103** may be used for powering or charging an associated client device **105,** which may be an electrical device coupled to or integrated with the receiver **103.** The receiver **103** may receive power transmission waves from one or more power transmission signals originating from one or more transmitters **101.** The receiver **103** may receive the power transmission signals as a single beam produced by the transmitter **101,** or the receiver **103** may harvest power transmission waves from a pocket of energy **104,** which may be a three-dimensional field in space resulting from the convergence of a plurality of power transmission waves produced by one or more transmitters **101.** The receiver **103** may comprise an array of antennas **112** configured to receive power transmission waves from a power transmission signal and harvest the energy from the power transmission signals of the single beam or pocket of energy **104.** The receiver **103** may comprise circuitry that then converts the energy of the power transmission signals (e.g., the radio frequency electromagnetic radiation) to electrical energy. A rectifier of the receiver **103** may translate the electrical energy from AC to DC. Other types of conditioning may be applied, as well. For example, a voltage conditioning circuit may increase or decrease the voltage of the electrical energy as required by the client device **105.** An electrical relay may then convey the electrical energy from the receiver **103** to the client device **105.**

In some embodiments, the receiver **103** may comprise a communications component that transmits control signals to the transmitter **101** in order to exchange data in real-time or near real-time. The control signals may contain status information about the client device **105,** the receiver **103,** or the power transmission signals. Status information may include, for example, present location information of the device **105,** amount of charge received, amount of charged used, and user account information, among other types of information. Further, in some applications, the receiver **103** including the rectifier that it contains may be integrated into the client device **105.** For practical purposes, the receiver **103,** wire **111,** and client device **105** may be a single unit contained in a single packaging.

### 4. Control Signals

In some embodiments, control signals may serve as data inputs used by the various antenna elements responsible for controlling production of power transmission signals and/or pocket-forming. Control signals may be produced by the receiver **103** or the transmitter **101** using an external power supply (not shown) and a local oscillator chip (not shown), which in some cases may include using a piezoelectric material. Control signals may be RF waves or any other communication medium or protocol capable of communicating data between processors, such as Bluetooth®, RFID, infrared, near-field communication (NFC). As detailed later, control signals may be used to convey information between the transmitter **101** and the receiver **103** used to adjust the power transmission signals, as well as contain information related to status, efficiency, user data, power consumption, billing, geolocation, and other types of information.

### 5. Detectors

A detector **107** may comprise hardware similar to receivers **103,** which may allow the detector **107** to receive power transmission signals originating from one or more transmitters **101.** The detector **107** may be used by users to identify the location of pockets of energy **104,** so that users may determine the preferable placement of a receiver **103.** In some embodiments, the detector **107** may comprise an indicator light **108** that indicates when the detector is placed within the pocket of energy **104.** As an example, in **FIG. 1****,** detectors **107a, 107b** are located within the pocket of energy **104** generated by the transmitter **101,** which may trigger the detectors **107a, 107b** to turn on their respective indicator lights **108a, 108b,** because the detectors **107a, 107b** are receiving power transmission signals of the pocket of energy **104;** whereas, the indicator light **108c** of a third detector **107c** located outside of the pockets of energy 104, is turned off, because the third detector **107c** is not receiving the power transmission signals from the transmitter **101.** It should be appreciated that the functions of a detector, such as the indicator light, may be integrated into a receiver or into a client device in alternative embodiments as well.

### 6. Client Device

A client device **105** may be any electrical device that requires continuous electrical energy or that requires power from a battery. Non-limiting examples of client devices **105** may include laptops, mobile phones, smartphones, tablets, music players, toys, batteries, flashlights, lamps, electronic watches, cameras, gaming consoles, appliances, GPS devices, and wearable devices or so-called "wearables" (e.g., fitness bracelets, pedometers, smartwatch), among other types of electrical devices.

In some embodiments, the client device **105a** may be a physical device distinct from the receiver **103a** associated with the client device **105a.** In such embodiments, the client device **105a** may be connected to the receiver over a wire **111** that conveys converted electrical energy from the receiver **103a** to the client device **105a.** In some cases, other types of data may be transported over the wire **111,** such as power consumption status, power usage metrics, device identifiers, and other types of data.

In some embodiments, the client device **105b** may be permanently integrated or detachably coupled to the receiver **103b,** thereby forming a single integrated product or unit. As an example, the client device **105b** may be placed into a sleeve that has embedded receivers **103b** and that may detachably couple to the device's **105b** power supply input, which may be typically used to charge the device's **105b** battery. In this example, the device **105b** may be decoupled from the receiver, but may remain in the sleeve regardless of whether or not the device **105b** requires an electrical charge or is being used. In another example, in lieu of having a battery that holds a charge for the device **105b,** the device **105b** may comprise an integrated receiver **105b,** which may be permanently integrated into the device **105b** so as to form an indistinct product, device, or unit. In this example, the device **105b** may rely almost entirely on the integrated receiver **103b** to produce electrical energy by harvesting pockets of energy **104.** It should be clear to someone skilled in the art that the connection between the receiver **103** and the client device **105** may be a wire **111** or may be an electrical connection on a circuit board or an integrated circuit, or even a wireless connection, such as inductive or magnetic.

### B. Method of Wireless Power Transmission

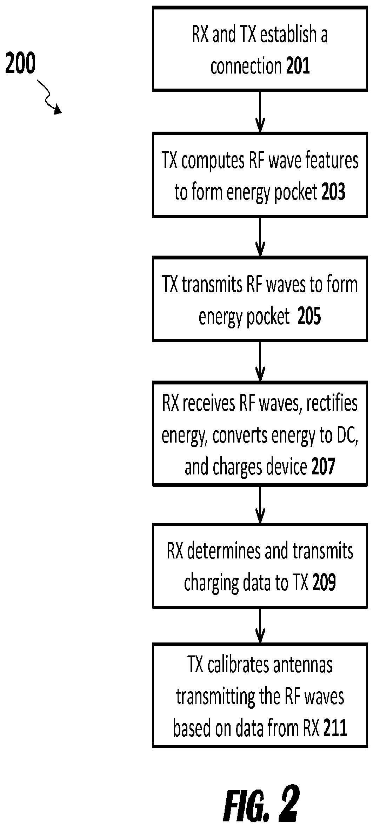

**FIG. 2** shows steps of wireless power transmission, according to an exemplary method **200** embodiment.

In a first step **201,** a transmitter (TX) establishes a connection or otherwise associates with a receiver (RX). That is, in some embodiments, transmitters and receivers may communicate control data over using a wireless communication protocol capable of transmitting information between two processors of electrical devices (e.g., Bluetooth®, Bluetooth Low Energy (BLE), Wi-Fi, NFC, ZigBee®). For example, in embodiments implementing Bluetooth® or Bluetooth® variants, the transmitter may scan for receiver's broadcasting advertisement signals or a receiver may transmit an advertisement signal to the transmitter. The advertisement signal may announce the receiver's presence to the transmitter, and may trigger an association between the transmitter and the receiver. As described herein, in some embodiments, the advertisement signal may communicate information that may be used by various devices (e.g., transmitters, client devices, sever computers, other receivers) to execute and manage pocket-forming procedures. Information contained within the advertisement signal may include a device identifier (e.g., MAC address, IP address, UUID), the voltage of electrical energy received, client device power consumption, and other types of data related to power transmission. The transmitter may use the advertisement signal transmitted to identify the receiver and, in some cases, locate the receiver in a two-dimensional space or in a three-dimensional space. Once the transmitter identifies the receiver, the transmitter may establish the connection associated in the transmitter with the receiver, allowing the transmitter and receiver to communicate control signals over a second channel.

In a next step **203,** the transmitter may use the advertisement signal to determine a set of power transmission signal features for transmitting the power transmission signals, to then establish the pockets of energy. Non-limiting examples of features of power transmission signals may include phase, gain, amplitude, magnitude, and direction among others. The transmitter may use information contained in the receiver's advertisement signal, or in subsequent control signals received from the receiver, to determine how to produce and transmit the power transmission signals so that the receiver may receive the power transmission signals. In some cases, the transmitter may transmit power transmission signals in a way that establishes a pocket of energy, from which the receiver may harvest electrical energy. In some embodiments, the transmitter may comprise a processor executing software modules capable of automatically identifying the power transmission signal features needed to establish a pocket of energy based on information received from the receiver, such as the voltage of the electrical energy harvested by the receiver from the power transmission signals. It should be appreciated that in some embodiments, the functions of the processor and/or the software modules may be implemented in an Application Specific Integrated Circuit (ASIC).

Additionally or alternatively, in some embodiments, the advertisement signal or subsequent signal transmitted by the receiver over a second communications channel may indicate one or more power transmission signals features, which the transmitter may then use to produce and transmit power transmission signals to establish a pocket of energy. For example, in some cases the transmitter may automatically identify the phase and gain necessary for transmitting the power transmission signals based on the location of the device and the type of device or receiver; and, in some cases, the receiver may inform the transmitter the phase and gain for effectively transmitting the power transmission signals.

In a next step **205,** after the transmitter determines the appropriate features to use when transmitting the power transmission signals, the transmitter may begin transmitting power transmission signals, over a separate channel from the control signals. Power transmission signals may be transmitted to establish a pocket of energy. The transmitter's antenna elements may transmit the power transmission signals such that the power transmission signals converge in a two-dimensional or three-dimensional space around the receiver. The resulting field around the receiver forms a pocket of energy from which the receiver may harvest electrical energy. One antenna element may be used to transmit power transmission signals to establish two-dimensional energy transmissions; and in some cases, a second or additional antenna element may be used to transmit power transmission signals in order to establish a three-dimensional pocket of energy. In some cases, a plurality of antenna elements may be used to transmit power transmission signals in order to establish the pocket of energy. Moreover, in some cases, the plurality of antennas may include all of the antennas in the transmitter; and, in some cases, the plurality of antennas may include a number of the antennas in the transmitter, but fewer than all of the antennas of the transmitter.

As previously mentioned, the transmitter may produce and transmit power transmission signals, according to a determined set of power transmission signal features, which may be produced and transmitted using an external power source and a local oscillator chip comprising a piezoelectric material. The transmitter may comprise an RFIC that controls production and transmission of the power transmission signals based on information related to power transmission and pocket-forming received from the receiver. This control data may be communicated over a different channel from the power transmission signals, using wireless communications protocols, such as BLE, NFC, or ZigBee®. The RFIC of the transmitter may automatically adjust the phase and/or relative magnitudes of the power transmission signals as needed. Pocket-forming is accomplished by the transmitter transmitting the power transmission signals in a manner that forms constructive interference patterns.

Antenna elements of the transmitter may use concepts of wave interference to determine certain power transmission signals features (e.g., direction of transmission, phase of power transmission signal wave), when transmitting the power transmission signals during pocket-forming. The antenna elements may also use concepts of constructive interference to generate a pocket of energy, but may also utilize concepts of deconstructive interference to generate a transmission null in a particular physical location.

In some embodiments, the transmitter may provide power to a plurality of receivers using pocket-forming, which may require the transmitter to execute a procedure for multiple pocket-forming. A transmitter comprising a plurality of antenna elements may accomplish multiple pocket-forming by automatically computing the phase and gain of power transmission signal waves, for each antenna element of the transmitter tasked with transmitting power transmission signals the respective receivers. The transmitter may compute the phase and gains independently, because multiple wave paths for each power transmission signal may be generated by the transmitter's antenna elements to transmit the power transmission signals to the respective antenna elements of the receiver.

As an example of the computation of phase/gain adjustments for two antenna elements of the transmitter transmitting two signals, say X and Y where Y is 180 degree phase shifted version of X (Y = - X). At a physical location where the cumulative received waveform is X-Y, a receiver receives X-Y = X+X = 2X, whereas at a physical location where the cumulative received waveform is X+Y, a receiver receives X+Y = X-X = 0.

In a next step **207,** the receiver may harvest or otherwise receive electrical energy from power transmission signals of a single beam or a pocket of energy. The receiver may comprise a rectifier and AC/DC converter, which may convert the electrical energy from AC current to DC current, and a rectifier of the receiver may then rectify the electrical energy, resulting in useable electrical energy for a client device associated with the receiver, such as a laptop computer, smartphone, battery, toy, or other electrical device. The receiver may utilize the pocket of energy produced by the transmitter during pocket-forming to charge or otherwise power the electronic device.

In next step **209,** the receiver may generate control data containing information indicating the effectiveness of the single beam or energy pockets providing the receiver power transmission signals. The receiver may then transmit control signals containing the control data, to the transmitter. The control signals may be transmitted intermittently, depending on whether the transmitter and receiver are communicating synchronously (i.e., the transmitter is expecting to receive control data from the receiver). Additionally, the transmitter may continuously transmit the power transmission signals to the receiver, irrespective of whether the transmitter and receiver are communicating control signals. The control data may contain information related to transmitting power transmission signals and/or establishing effective pockets of energy. Some of the information in the control data may inform the transmitter how to effectively produce and transmit, and in some cases adjust, the features of the power transmission signals. Control signals may be transmitted and received over a second channel, independent from the power transmission signals, using a wireless protocol capable of transmitting control data related to power transmission signals and/or pocket-forming, such as BLE, NFC, Wi-Fi, or the like.

As mentioned, the control data may contain information indicating the effectiveness of the power transmission signals of the single beam or establishing the pocket of energy. The control data may be generated by a processor of the receiver monitoring various aspects of receiver and/or the client device associated with the receiver. The control data may be based on various types of information, such as the voltage of electrical energy received from the power transmission signals, the quality of the power transmission signals reception, the quality of the battery charge or quality of the power reception, and location or motion of the receiver, among other types of information useful for adjusting the power transmission signals and/or pocket-forming.

In some embodiments, a receiver may determine the amount of power being received from power transmission signals transmitted from the transmitter and may then indicate that the transmitter should "split" or segment the power transmission signals into less-powerful power transmission signals. The less-powerful power transmission signals may be bounced off objects or walls nearby the device, thereby reducing the amount of power being transmitted directly from the transmitter to the receiver.

In a next step **211,** the transmitter may calibrate the antennas transmitting the power transmission signals, so that the antennas transmit power transmission signals having a more effective set of feature (e.g., direction, phase, gain, amplitude). In some embodiments, a processor of the transmitter may automatically determine more effective features for producing and transmitting the power transmission signals based on a control signal received from the receiver. The control signal may contain control data, and may be transmitted by the receiver using any number of wireless communication protocols (e.g., BLE, Wi-Fi, ZigBee®). The control data may contain information expressly indicating the more effective features for the power transmission waves; or the transmitter may automatically determine the more effective features based on the waveform features of the control signal (e.g., shape, frequency, amplitude). The transmitter may then automatically reconfigure the antennas to transmit recalibrated power transmission signals according to the newly determined more-effective features. For example, the processor of the transmitter may adjust gain and/or phase of the power transmission signals, among other features of power transmission feature, to adjust for a change in location of the receiver, after a user moved the receiver outside of the three-dimensional space where the pocket of energy is established.

### C. System Architecture of Power Transmission System

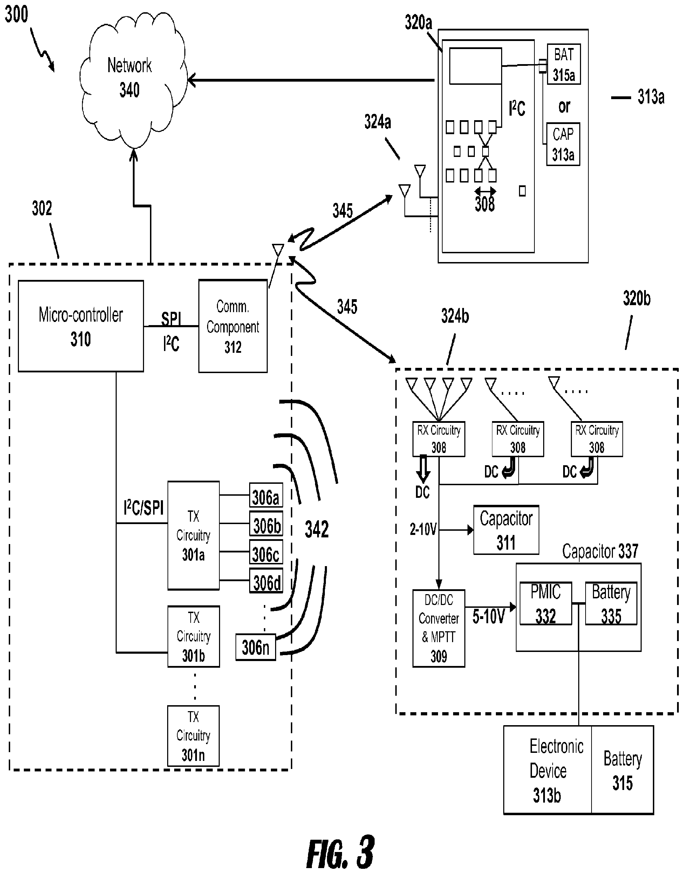

**FIG. 3** illustrates an architecture **300** for wireless power transmission using pocket-forming, according to an exemplary embodiment. "Pocket-forming" may refer to generating two or more power transmission waves **342** that converge at a location in three-dimensional space, resulting in constructive interference patterns at that location. A transmitter **302** may transmit and/or broadcast controlled power transmission waves **342** (e.g., microwaves, radio waves, ultrasound waves) that may converge in three-dimensional space. These power transmission waves **342** may be controlled through phase and/or relative amplitude adjustments to form constructive interference patterns (pocket-forming) in locations where a pocket of energy is intended. It should be understood also that the transmitter can use the same principles to create destructive interference in a location thereby creating a transmission null - a location where transmitted power transmission waves cancel each other out substantially and no significant energy can be collected by a receiver. In typical use cases the aiming of a power transmission signal at the location of the receiver is the objective; and in other cases it may be desirable to specifically avoid power transmission to a particular location; and in other cases it may be desirable to aim power transmission signal at a location while specifically avoiding transmission to a second location at the same time. The transmitter takes the use case into account when calibrating antennas for power transmission.

Antenna elements **306** of the transmitter **302** may operate in single array, pair array, quad array, or any other suitable arrangement that may be designed in accordance with the desired application. Pockets of energy may be formed at constructive interference patterns where the power transmission waves **342** accumulate to form a three-dimensional field of energy, around which one or more corresponding transmission null in a particular physical location may be generated by destructive interference patterns. Transmission null in a particular physical location-may refer to areas or regions of space where pockets of energy do not form because of destructive interference patterns of power transmission waves **342.**

A receiver **320** may then utilize power transmission waves **342** emitted by the transmitter **302** to establish a pocket of energy, for charging or powering an electronic device **313,** thus effectively providing wireless power transmission. Pockets of energy may refer to areas or regions of space where energy or power may accumulate in the form of constructive interference patterns of power transmission waves **342.** In other situations there can be multiple transmitters **302** and/or multiple receivers **320** for powering various electronic equipment for example smartphones, tablets, music players, toys and others at the same time. In other embodiments, adaptive pocket-forming may be used to regulate power on electronic devices. Adaptive pocket-forming may refer to dynamically adjusting pocket-forming to regulate power on one or more targeted receivers.

Receiver **320** may communicate with transmitter **302** by generating a short signal through antenna elements **324** in order to indicate its position with respect to the transmitter **302.** In some embodiments, receiver **320** may additionally utilize a network interface card (not shown) or similar computer networking component to communicate through a network **340** with other devices or components of the system **300,** such as a cloud computing service that manages several collections of transmitters **302.** The receiver **320** may comprise circuitry **308** for converting the power transmission signals **342** captured by the antenna elements **324,** into electrical energy that may be provided to and electric device **313** and/or a battery of the device **315.** In some embodiments, the circuitry may provide electrical energy to a battery of receiver **335,** which may store energy without the electrical device **313** being communicatively coupled to the receiver **320.**

Communications components **324** may enable receiver **320** to communicate with the transmitter **302** by transmitting control signals **345** over a wireless protocol. The wireless protocol can be a proprietary protocol or use a conventional wireless protocol, such as Bluetooth®, BLE, Wi-Fi, NFC, ZigBee, and the like. Communications component **324** may then be used to transfer information, such as an identifier for the electronic device **313,** as well as battery level information, geographic location data, or other information that may be of use for transmitter **302** in determining when to send power to receiver **320,** as well as the location to deliver power transmission waves **342** creating pockets of energy. In other embodiments, adaptive pocket-forming may be used to regulate power provided to electronic devices **313.** In such embodiments, the communications components **324** of the receiver may transmit voltage data indicating the amount of power received at the receiver **320,** and/or the amount of voltage provided to an electronic device **313b** or battery **315.**

Once transmitter **302** identifies and locates receiver **320,** a channel or path for the control signals **345** can be established, through which the transmitter **302** may know the gain and phases of the control signals **345** coming from receiver **320.** Antenna elements 306 of the transmitter **302** may start to transmit or broadcast controlled power transmission waves **342** (e.g., radio frequency waves, ultrasound waves), which may converge in three-dimensional space by using at least two antenna elements **306** to manipulate the power transmission waves **342** emitted from the respective antenna element **306.** These power transmission waves **342** may be produced by using an external power source and a local oscillator chip using a suitable piezoelectric material. The power transmission waves **342** may be controlled by transmitter circuitry **301,** which may include a proprietary chip for adjusting phase and/or relative magnitudes of power transmission waves **342.** The phase, gain, amplitude, and other waveform features of the power transmission waves **342** may serve as inputs for antenna element **306** to form constructive and destructive interference patterns (pocket-forming). In some implementations, a micro-controller **310** or other circuit of the transmitter **302** may produce a power transmission signal, which comprises power transmission waves **342,** and that may be may split into multiple outputs by transmitter circuitry **301,** depending on the number of antenna elements **306** connected to the transmitter circuitry **301.** For example, if four antenna elements **306a-d** are connected to one transmitter circuit **301a,** the power transmission signal will be split into four different outputs each output going to an antenna element **306** to be transmitted as power transmission waves **342** originating from the respective antenna elements **306.**

Pocket-forming may take advantage of interference to change the directionality of the antenna element 306 where constructive interference generates a pocket of energy and destructive interference generates a transmission null. Receiver 320 may then utilize pocket of energy produced by pocket-forming for charging or powering an electronic device and therefore effectively providing wireless power transmission.

Multiple pocket-forming may be achieved by computing the phase and gain from each antenna 306 of transmitter 302 to each receiver 320.

### D. Components of Systems Forming Pockets of Energy

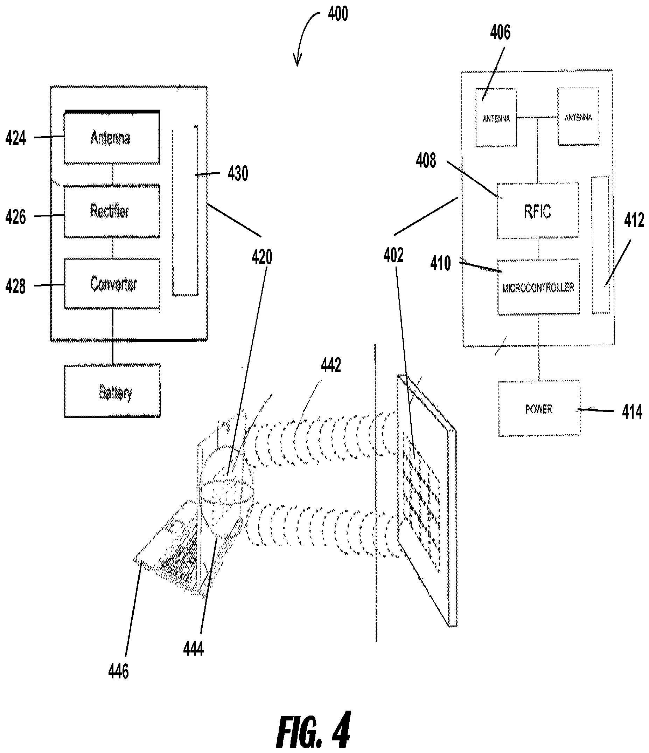

**FIG. 4** shows components of an exemplary system **400** of wireless power transmission using pocket-forming procedures. The system **400** may comprise one or more transmitters **402,** one or more receivers **420,** and one or more client devices **446.**

### 1. Transmitters

Transmitters **402** may be any device capable of broadcasting wireless power transmission signals, which may be RF waves **442,** for wireless power transmission, as described herein. Transmitters **402** may be responsible for performing tasks related to transmitting power transmission signals, which may include pocket-forming, adaptive pocket-forming, and multiple pocket-forming. In some implementations, transmitters **402** may transmit wireless power transmissions to receivers **420** in the form of RF waves, which may include any radio signal having any frequency or wavelength. A transmitter **402** may include one or more antenna elements **406,** one or more RFICs **408,** one or more microcontrollers **410,** one or more communication components **412,** a power source **414,** and a housing that may allocate all the requested components for the transmitter **402.** The various components of transmitters **402** may comprise, and/or may be manufactured using, meta-materials, micro-printing of circuits, nano-materials, and the like.

In the exemplary system **400,** the transmitter **402** may transmit or otherwise broadcast controlled RF waves **442** that converge at a location in three-dimensional space, thereby forming a pocket of energy **444.** These RF waves may be controlled through phase and/or relative amplitude adjustments to form constructive or destructive interference patterns (i.e., pocket-forming). Pockets of energy **444** may be fields formed at constructive interference patterns and may be three-dimensional in shape; whereas transmission null in a particular physical location may be generated at destructive interference patterns. Receivers **420** may harvest electrical energy from the pockets of energy **444** produced by pocket-forming for charging or powering an electronic client device **446** (e.g., a laptop computer, a cell phone). In some embodiments, the system **400** may comprise multiple transmitters **402** and/or multiple receivers **420,** for powering various electronic equipment. Non-limiting examples of client devices **446** may include: smartphones, tablets, music players, toys and others at the same time. In some embodiments, adaptive pocket-forming may be used to regulate power on electronic devices.

### 2. Receivers

Receivers **420** may include a housing where at least one antenna element **424,** one rectifier **426,** one power converter **428,** and a communications component **430** may be included.

Housing of the receiver **420** can be made of any material capable of facilitating signal or wave transmission and/or reception, for example plastic or hard rubber. Housing may be an external hardware that may be added to different electronic equipment, for example in the form of cases, or can be embedded within electronic equipment as well.

### 3. Antenna Elements

Antenna elements **424** of the receiver **420** may comprise any type of antenna capable of transmitting and/or receiving signals in frequency bands used by the transmitter **402A.** Antenna elements **424** may include vertical or horizontal polarization, right hand or left hand polarization, elliptical polarization, or other polarizations, as well as any number of polarization combinations. Using multiple polarizations can be beneficial in devices where there may not be a preferred orientation during usage or whose orientation may vary continuously through time, for example a smartphone or portable gaming system. For devices having a well-defined expected orientation (e.g., a two-handed video game controller), there might be a preferred polarization for antennas, which may dictate a ratio for the number of antennas of a given polarization. Types of antennas in antenna elements **424** of the receiver **420,** may include patch antennas, which may have heights from about 1/8 inch to about 6 inches and widths from about 1/8 inch to about 6 inches. Patch antennas may preferably have polarization that depends upon connectivity, i.e., the polarization may vary depending on from which side the patch is fed. In some embodiments, the type of antenna may be any type of antenna, such as patch antennas, capable of dynamically varying the antenna polarization to optimize wireless power transmission.

### 4. Rectifier

Rectifiers **426** of the receiver **420** may include diodes, resistors, inductors, and/or capacitors to rectify alternating current (AC) voltage generated by antenna elements **424** to direct current (DC) voltage. Rectifiers **426** may be placed as close as is technically possible to antenna elements **A24B** to minimize losses in electrical energy gathered from power transmission signals. After rectifying AC voltage, the resulting DC voltage may be regulated using power converters **428.** Power converters **428** can be a DC-to-DC converter that may help provide a constant voltage output, regardless of input, to an electronic device, or as in this exemplary system **400,** to a battery. Typical voltage outputs can be from about 5 volts to about 10 volts. In some embodiments, power converter may include electronic switched mode DC-DC converters, which can provide high efficiency. In such embodiments, the receiver **420** may comprise a capacitor (not shown) that is situated to receive the electrical energy before power converters **428.** The capacitor may ensure sufficient current is provided to an electronic switching device (e.g., switch mode DC-DC converter), so it may operate effectively. When charging an electronic device, for example a phone or laptop computer, initial high-currents that can exceed the minimum voltage needed to activate operation of an electronic switched mode DC-DC converter, may be required. In such a case, a capacitor (not shown) may be added at the output of receivers **420** to provide the extra energy required. Afterwards, lower power can be provided. For example, 1/80 of the total initial power that may be used while having the phone or laptop still build-up charge.

### 5. Communications Component

A communications component **430** of a receiver **420** may communicate with one or more other devices of the system **400,** such as other receivers **420,** client devices, and/or transmitters **402.** Different antenna, rectifier or power converter arrangements are possible for a receiver as will be explained in following embodiments.

### E. Methods of Pocket Forming for a Plurality of Devices

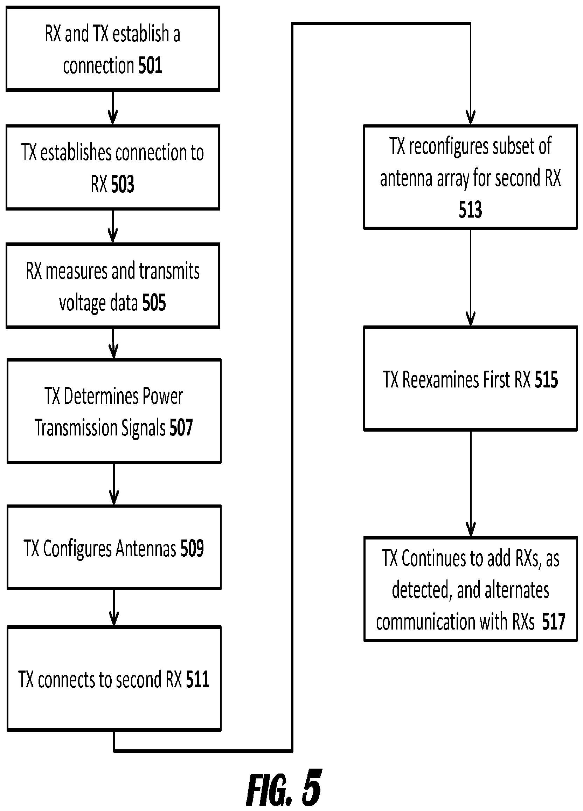

**FIG. 5** shows steps of powering a plurality of receiver devices, according to an exemplary embodiment.

In a first step **501,** a transmitter (TX) establishes a connection or otherwise associates with a receiver (RX). That is, in some embodiments, transmitters and receivers may communicate control data over using a wireless communication protocol capable of transmitting information between two processors of electrical devices (e.g., Bluetooth®, BLE, Wi-Fi, NFC, ZigBee®). For example, in embodiments implement Bluetooth® or Bluetooth® variants, the transmitter may scan for receiver's broadcasting advertisement signals or a receiver may transmit an advertisement signal to the transmitter. The advertisement signal may announce the receiver's presence to the transmitter, and may trigger an association between the transmitter and the receiver. As described later, in some embodiments, the advertisement signal may communicate information that may be used by various devices (e.g., transmitters, client devices, sever computers, other receivers) to execute and manage pocket-forming procedures. Information contained within the advertisement signal may include a device identifier (e.g., MAC address, IP address, UUID), the voltage of electrical energy received, client device power consumption, and other types of data related to power transmission waves. The transmitter may use the advertisement signal transmitted to identify the receiver and, in some cases, locate the receiver in a two-dimensional space or in a three-dimensional space. Once the transmitter identifies the receiver, the transmitter may establish the connection associated in the transmitter with the receiver, allowing the transmitter and receiver to communicate control signals over a second channel.

As an example, when a receiver comprising a Bluetooth® processor is powered-up or is brought within a detection range of the transmitter, the Bluetooth processor may begin advertising the receiver according to Bluetooth® standards. The transmitter may recognize the advertisement and begin establishing connection for communicating control signals and power transmission signals. In some embodiments, the advertisement signal may contain unique identifiers so that the transmitter may distinguish that advertisement and ultimately that receiver from all the other Bluetooth® devices nearby within range.

In a next step **503,** when the transmitter detects the advertisement signal, the transmitter may automatically form a communication connection with that receiver, which may allow the transmitter and receiver to communicate control signals and power transmission signals. The transmitter may then command that receiver to begin transmitting real-time sample data or control data. The transmitter may also begin transmitting power transmission signals from antennas of the transmitter's antenna array.

In a next step **505,** the receiver may then measure the voltage, among other metrics related to effectiveness of the power transmission signals, based on the electrical energy received by the receiver's antennas. The receiver may generate control data containing the measured information, and then transmit control signals containing the control data to the transmitter. For example, the receiver may sample the voltage measurements of received electrical energy, for example, at a rate of 100 times per second. The receiver may transmit the voltage sample measurement back to the transmitter, 100 times a second, in the form of control signals.

In a next step **507,** the transmitter may execute one or more software modules monitoring the metrics, such as voltage measurements, received from the receiver. Algorithms may vary production and transmission of power transmission signals by the transmitter's antennas, to maximize the effectiveness of the pockets of energy around the receiver. For example, the transmitter may adjust the phase at which the transmitter's antenna transmit the power transmission signals, until that power received by the receiver indicates an effectively established pocket energy around the receiver. When an optimal configuration for the antennas is identified, memory of the transmitter may store the configurations to keep the transmitter broadcasting at that highest level.

In a next step **509,** algorithms of the transmitter may determine when it is necessary to adjust the power transmission signals and may also vary the configuration of the transmit antennas, in response to determining such adjustments are necessary. For example, the transmitter may determine the power received at a receiver is less than maximal, based on the data received from the receiver. The transmitter may then automatically adjust the phase of the power transmission signals, but may also simultaneously continues to receive and monitor the voltage being reported back from receiver.

In a next step **511,** after a determined period of time for communicating with a particular receiver, the transmitter may scan and/or automatically detect advertisements from other receivers that may be in range of the transmitter. The transmitters may establish a connection to the second receiver responsive to Bluetooth® advertisements from a second receiver.

In a next step **513,** after establishing a second communication connection with the second receiver, the transmitter may proceed to adjust one or more antennas in the transmitter's antenna array. In some embodiments, the transmitter may identify a subset of antennas to service the second receiver, thereby parsing the array into subsets of arrays that are associated with a receiver. In some embodiments, the entire antenna array may service a first receiver for a given period of time, and then the entire array may service the second receiver for that period of time.

Manual or automated processes performed by the transmitter may select a subset of arrays to service the second receiver. In this example, the transmitter's array may be split in half, forming two subsets. As a result, half of the antennas may be configured to transmit power transmission signals to the first receiver, and half of the antennas may be configured for the second receiver. In the current step **513,** the transmitter may apply similar techniques discussed above to configure or optimize the subset of antennas for the second receiver. While selecting a subset of an array for transmitting power transmission signals, the transmitter and second receiver may be communicating control data. As a result, by the time that the transmitter alternates back to communicating with the first receiver and/or scan for new receivers, the transmitter has already received a sufficient amount of sample data to adjust the phases of the waves transmitted by second subset of the transmitter's antenna array, to transmit power transmission waves to the second receiver effectively.

In a next step **515,** after adjusting the second subset to transmit power transmission signals to the second receiver, the transmitter may alternate back to communicating control data with the first receiver, or scanning for additional receivers. The transmitter may reconfigure the antennas of the first subset, and then alternate between the first and second receivers at a predetermined interval.

In a next step **517,** the transmitter may continue to alternate between receivers and scanning for new receivers, at a predetermined interval. As each new receiver is detected, the transmitter may establish a connection and begin transmitting power transmission signals, accordingly.

In one exemplary embodiment, the receiver may be electrically connected to a device like a smart phone. The transmitter's processor would scan for any Bluetooth devices. The receiver may begin advertising that it's a Bluetooth device through the Bluetooth chip. Inside the advertisement, there may be unique identifiers so that the transmitter, when it scanned that advertisement, could distinguish that advertisement and ultimately that receiver from all the other Bluetooth devices nearby within range. When the transmitter detects that advertisement and notices it is a receiver, then the transmitter may immediately form a communication connection with that receiver and command that receiver to begin sending real time sample data.

The receiver would then measure the voltage at its receiving antennas, send that voltage sample measurement back to the transmitter (e.g.,100 times a second). The transmitter may start to vary the configuration of the transmit antennas by adjusting the phase. As the transmitter adjusts the phase, the transmitter monitors the voltage being sent back from the receiver. In some implementations, the higher the voltage, the more energy may be in the pocket. The antenna phases may be altered until the voltage is at the highest level and there is a maximum pocket of energy around the receiver. The transmitter may keep the antennas at the particular phase so the voltage is at the highest level.

The transmitter may vary each individual antenna, one at a time. For example, if there are 32 antennas in the transmitter, and each antenna has 8 phases, the transmitter may begin with the first antenna and would step the first antenna through all 8 phases. The receiver may then send back the power level for each of the 8 phases of the first antenna. The transmitter may then store the highest phase for the first antenna. The transmitter may repeat this process for the second antenna, and step it through 8 phases. The receiver may again send back the power levels from each phase, and the transmitter may store the highest level. Next the transmitter may repeat the process for the third antenna and continue to repeat the process until all 32 antennas have stepped through the 8 phases. At the end of the process, the transmitter may transmit the maximum voltage in the most efficient manner to the receiver.

In another exemplary embodiment, the transmitter may detect a second receiver's advertisement and form a communication connection with the second receiver. When the transmitter forms the communication with the second receiver, the transmitter may aim the original 32 antennas towards the second receiver and repeat the phase process for each of the 32 antennas aimed at the second receiver. Once the process is completed, the second receiver may getting as much power as possible from the transmitter. The transmitter may communicate with the second receiver for a second, and then alternate back to the first receiver for a predetermined period of time (e.g., a second), and the transmitter may continue to alternate back and forth between the first receiver and the second receiver at the predetermined time intervals.

In yet another implementation, the transmitter may detect a second receiver's advertisement and form a communication connection with the second receiver. First, the transmitter may communicate with the first receiver and re-assign half of the exemplary 32 the antennas aimed at the first receiver, dedicating only 16 towards the first receiver. The transmitter may then assign the second half of the antennas to the second receiver, dedicating 16 antennas to the second receiver. The transmitter may adjust the phases for the second half of the antennas. Once the 16 antennas have gone through each of the 8 phases, the second receiver may be obtaining the maximum voltage in the most efficient manner to the receiver.

### F. Wireless Power Transmission with Selective Range

### 1. Constructive Interference

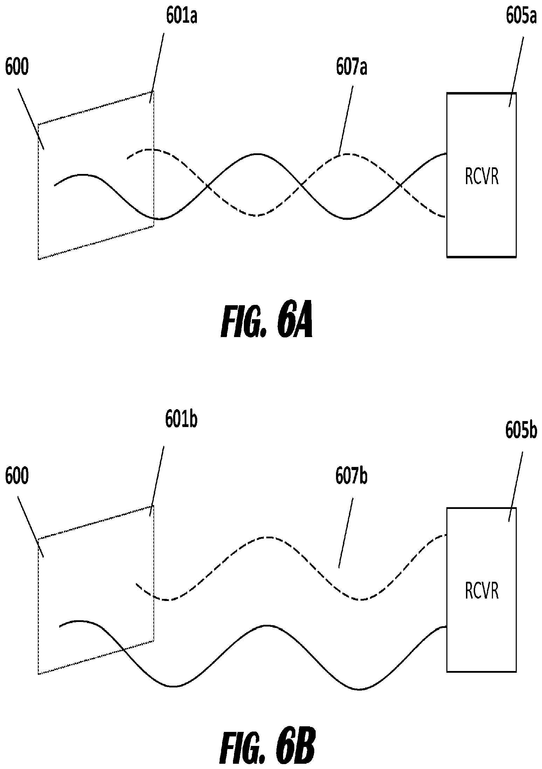

**FIG. 6A** and **FIG. 6B** show an exemplary system **600** implementing wireless power transmission principles that may be implemented during exemplary pocket-forming processes. A transmitter **601** comprising a plurality of antennas in an antenna array, may adjust the phase and amplitude, among other possible attributes, of power transmission waves **607,** being transmitted from antennas of the transmitter **601.** As shown in **FIG. 6A****,** in the absence of any phase or amplitude adjustment, power transmission waves **607a** may be transmitted from each of the antennas will arrive at different locations and have different phases. These differences are often due to the different distances from each antenna element of the transmitter **601a** to a receiver **605a** or receivers **605a,** located at the respective locations.

Continuing with **FIG. 6A****,** a receiver **605a** may receive multiple power transmission signals, each comprising power transmission waves **607a,** from multiple antenna elements of a transmitter **601a;** the composite of these power transmission signals may be essentially zero, because in this example, the power transmission waves add together destructively. That is, antenna elements of the transmitter 601a may transmit the exact same power transmission signal (i.e., comprising power transmission waves **607a** having the same features, such as phase and amplitude), and as such, when the power transmission waves **607a** of the respective power transmission signals arrive at the receiver **605a,** they are offset from each other by 180 degrees. Consequently, the power transmission waves **607a** of these power transmission signals "cancel" one another. Generally, signals offsetting one another in this way may be referred to as "destructive," and thus result in "destructive interference."

In contrast, as shown in **FIG. 6B****,** for so-called "constructive interference," signals comprising power transmission waves **607b** that arrive at the receiver exactly "in phase" with one another, combine to increase the amplitude of the each signal, resulting in a composite that is stronger than each of the constituent signals. In the illustrative example in **FIG. 6A****,** note that the phase of the power transmission waves **607a** in the transmit signals are the same at the location of transmission, and then eventually add up destructively at the location of the receiver **605a.** In contrast, in **FIG. 6B****,** the phase of the power transmission waves **607b** of the transmit signals are adjusted at the location of transmission, such that they arrive at the receiver **605b** in phase alignment, and consequently they add constructively. In this illustrative example, there will be a resulting pocket of energy located around the receiver **605b** in **FIG. 6B****;** and there will be a transmission null located around receiver in **FIG. 6A****.**

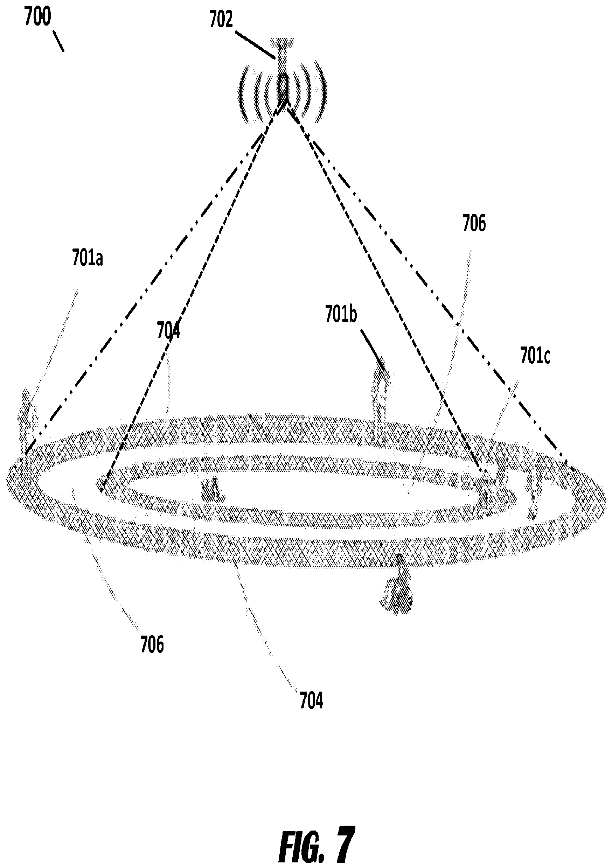

**FIG. 7** depicts wireless power transmission with selective range **700,** where a transmitter **702** may produce pocket-forming for a plurality of receivers associated with electrical devices **701.** Transmitter **702** may generate pocket-forming through wireless power transmission with selective range **700,** which may include one or more wireless charging radii **704** and one or more radii of a transmission null at a particular physical location **706**. A plurality of electronic devices **701** may be charged or powered in wireless charging radii **704.** Thus, several spots of energy may be created, such spots may be employed for enabling restrictions for powering and charging electronic devices **701.** As an example, the restrictions may include operating specific electronics in a specific or limited spot, contained within wireless charging radii **704.** Furthermore, safety restrictions may be implemented by the use of wireless power transmission with selective range **700,** such safety restrictions may avoid pockets of energy over areas or zones where energy needs to be avoided, such areas may include areas including sensitive equipment to pockets of energy and/or people which do not want pockets of energy over and/or near them. In embodiments such as the one shown in **FIG. 7****,** the transmitter **702** may comprise antenna elements found on a different plane than the receivers associated with electrical devices **701** in the served area. For example the receivers of electrical devices **701** may be in a room where a transmitter **702** may be mounted on the ceiling. Selective ranges for establishing pockets of energy using power transmission waves, which may be represented as concentric circles by placing an antenna array of the transmitter **702** on the ceiling or other elevated location, and the transmitter **702** may emit power transmission waves that will generate 'cones' of energy pockets. In some embodiments, the transmitter **701** may control the radius of each charging radii **704,** thereby establishing intervals for service area to create pockets of energy that are pointed down to an area at a lower plane, which may adjust the width of the cone through appropriate selection of antenna phase and amplitudes.

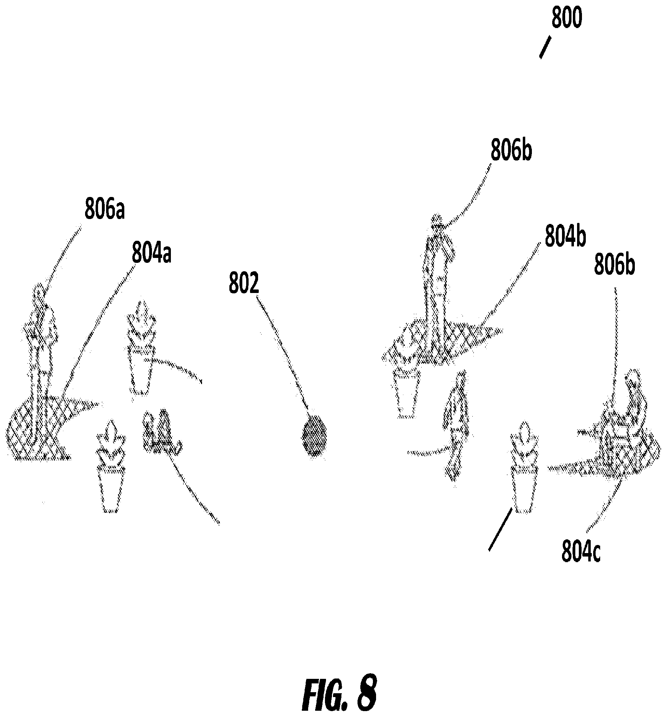

**FIG. 8** depicts wireless power transmission with selective range **800,** where a transmitter **802** may produce pocket-forming for a plurality of receivers **806.** Transmitter **802** may generate pocket-forming through wireless power transmission with selective range **800,** which may include one or more wireless charging spots **804.** A plurality of electronic devices may be charged or powered in wireless charging spots **804.** Pockets of energy may be generated over a plurality of receivers **806** regardless the obstacles **804** surrounding them. Pockets of energy may be generated by creating constructive interference, according to the principles described herein, in wireless charging spots **804.** Location of pockets of energy may be performed by tacking receivers **806** and by enabling a plurality of communication protocols by a variety of communication systems such as, Bluetooth® technology, infrared communication, Wi-Fi, FM radio, among others.

### G. Exemplary System Embodiment Using Heat Maps

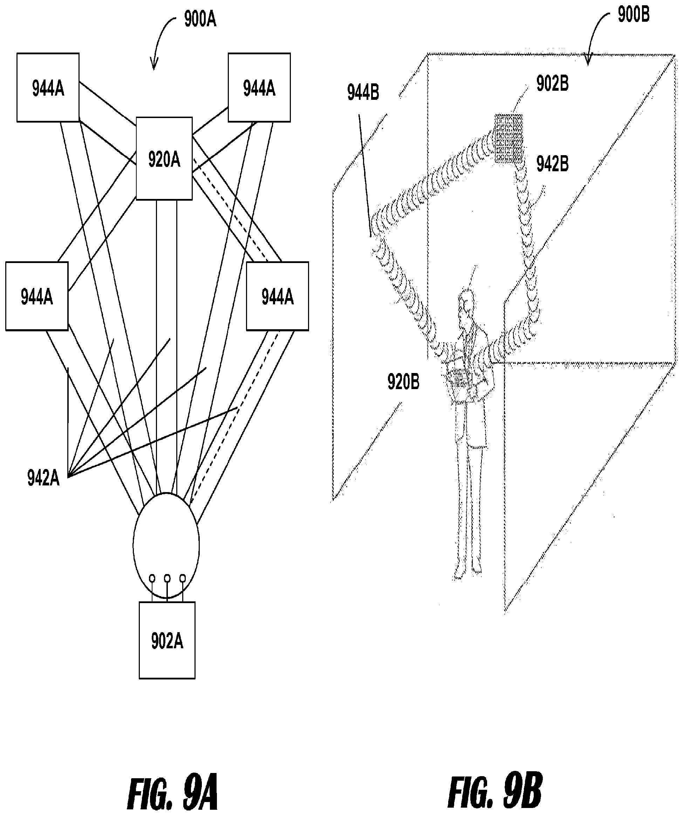

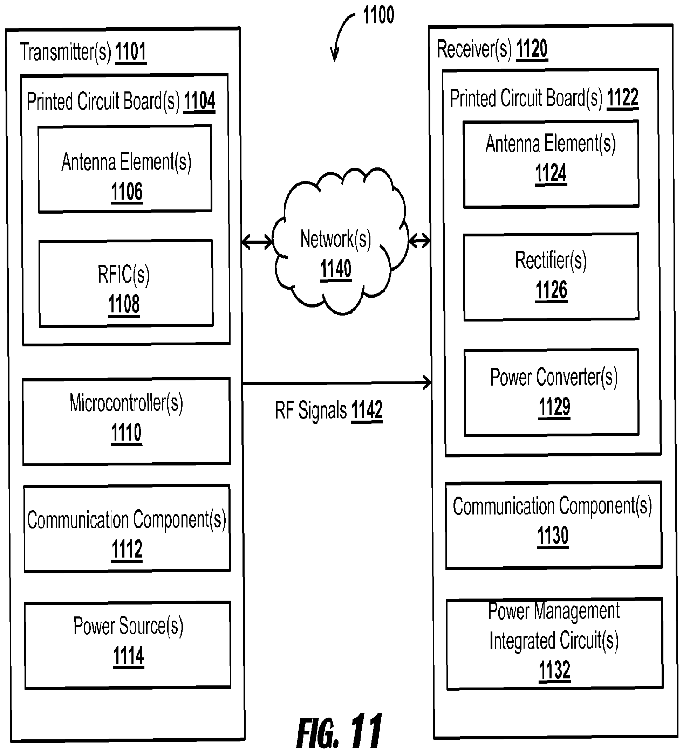

**FIGS. 9A** and **9B** illustrate a diagram of architecture **900A, 900B** for a wirelessly charging client computing platform, according to an exemplary embodiment. In some implementations, a user may be inside a room and may hold on his hands an electronic device (e.g. a smartphone, tablet). In some implementations, electronic device may be on furniture inside the room. The electronic device may include a receiver **920A, 920B** either embedded to the electronic device or as a separate adapter connected to electronic device. Receivers **920A, 920B** may include all the components described in **FIG. 11****.** A transmitter **902A, 902B** may be hanging on one of the walls of the room right behind user. Transmitters **902A, 902B** may also include all the components described in **FIG. 11****.**

As user may seem to be obstructing the path between receivers **920A, 920B** and transmitters **902A, 902B,** RF waves may not be easily aimed to the receivers **920A, 920B** in a linear direction. However, since the short signals generated from receivers **920A, 920B** may be omni-directional for the type of antenna element used, these signals may bounce over the walls **944A, 944B** until they reach transmitters **902A, 902B.** A hot spot **944A, 944B** may be any item in the room which will reflect the RF waves. For example, a large metal clock on the wall may be used to reflect the RF waves to a user's cell phone.

A micro controller in the transmitter adjusts the transmitted signal from each antenna based on the signal received from the receiver. Adjustment may include forming conjugates of the signal phases received from the receivers and further adjustment of transmit antenna phases taking into account the built-in phase of antenna elements. The antenna element may be controlled simultaneously to steer energy in a given direction. The transmitter **902A, 902B** may scan the room, and look for hot spots **944A, 944B.** Once calibration is performed, transmitters **902A, 902B** may focus RF waves in a channel following a path that may be the most efficient paths. Subsequently, RF signals **942A, 942B** may form a pocket of energy on a first electronic device and another pocket of energy in a second electronic device while avoiding obstacles such as user and furniture.

When scanning the service area, the room in **FIG. 9A** and **9B****,** the transmitter **902A, 902B** may employ different methods. As an illustrative example, but without limiting the possible methods that can be used, the transmitter **902A, 902B** may detect the phases and magnitudes of the signal coming from the receiver and use those to form the set of transmit phases and magnitudes, for example by calculating conjugates of them and applying them at transmit. As another illustrative example, the transmitter may apply all possible phases of transmit antennas in subsequent transmissions, one at a time, and detect the strength of the pocket of energy formed by each combination by observing information related to the signal from the receiver **920A, 920B.** Then the transmitter **902A, 902B** repeats this calibration periodically. In some implementations, the transmitter **902A, 902B** does not have to search through all possible phases, and can search through a set of phases that are more likely to result in strong pockets of energy based on prior calibration values. In yet another illustrative example, the transmitter **902A, 902B** may use preset values of transmit phases for the antennas to form pockets of energy directed to different locations in the room. The transmitter may for example scan the physical space in the room from top to bottom and left to right by using preset phase values for antennas in subsequent transmissions. The transmitter **902A, 902B** then detects the phase values that result in the strongest pocket of energy around the receiver **920a, 920b** by observing the signal from the receiver **920a, 920b.** It should be appreciated that there are other possible methods for scanning a service area for heat mapping that may be employed, without deviating from the scope or spirit of the embodiments described herein. The result of a scan, whichever method is used, is a heat-map of the service area (e.g., room, store) from which the transmitter **902A, 902B** may identify the hot spots that indicate the best phase and magnitude values to use for transmit antennas in order to maximize the pocket of energy around the receiver.

The transmitters **902A, 902B,** may use the Bluetooth connection to determine the location of the receivers **920A, 920B,** and may use different non-overlapping parts of the RF band to channel the RF waves to different receivers **920A, 920B.** In some implementations, the transmitters **902A, 902B,** may conduct a scan of the room to determine the location of the receivers **920A, 920B** and forms pockets of energy that are orthogonal to each other, by virtue of non-overlapping RF transmission bands. Using multiple pockets of energy to direct energy to receivers may inherently be safer than some alternative power transmission methods since no single transmission is very strong, while the aggregate power transmission signal received at the receiver is strong.

### H. Exemplary System Embodiment

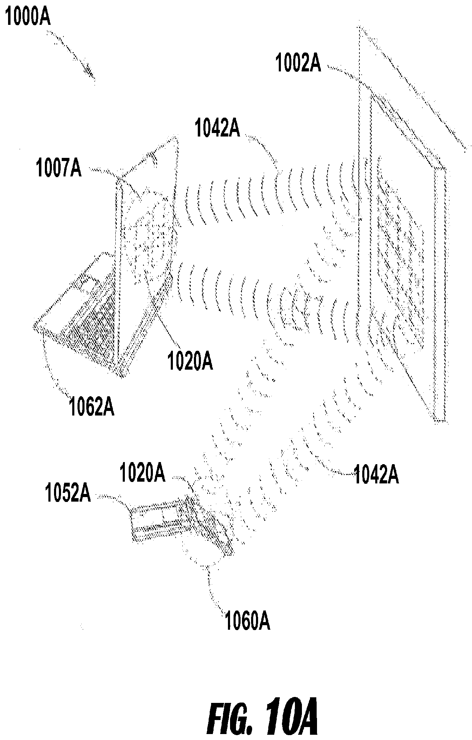

**FIG. 10A** illustrates wireless power transmission using multiple pocket-forming **1000A** that may include one transmitter **1002A** and at least two or more receivers 1020A. Receivers **1020A** may communicate with transmitters **1002A,** which is further described in **FIG. 11****.** Once transmitter **1002A** identifies and locates receivers **1020A,** a channel or path can be established by knowing the gain and phases coming from receivers 1020A. Transmitter **1002A** may start to transmit controlled RF waves **1042A** which may converge in three-dimensional space by using a minimum of two antenna elements. These RF waves **1042A** may be produced using an external power source and a local oscillator chip using a suitable piezoelectric material. RF waves **1042A** may be controlled by RFIC, which may include a proprietary chip for adjusting phase and/or relative magnitudes of RF signals that may serve as inputs for antenna elements to form constructive and destructive interference patterns (pocket-forming). Pocket-forming may take advantage of interference to change the directionality of the antenna elements where constructive interference generates a pocket of energy **1060A** and deconstructive interference generates a transmission null. Receivers **1020A** may then utilize pocket of energy **1060A** produced by pocket-forming for charging or powering an electronic device, for example, a laptop computer **1062A** and a smartphone **1052A** and thus effectively providing wireless power transmission.

Multiple pocket forming **1000A** may be achieved by computing the phase and gain from each antenna of transmitter **1002A** to each receiver **1020A.** The computation may be calculated independently because multiple paths may be generated by antenna element from transmitter **1002A** to antenna element from receivers **1020A.**

### I. Exemplary System Embodiment

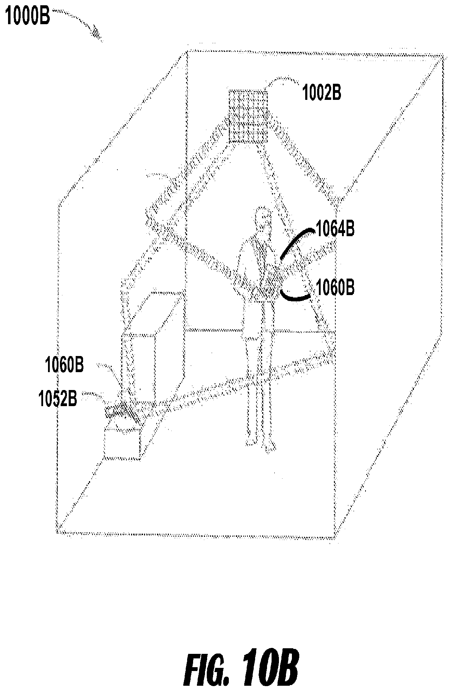

**FIG. 10B** is an exemplary illustration of multiple adaptive pocket-forming 1000B. In this embodiment, a user may be inside a room and may hold on his hands an electronic device, which in this case may be a tablet **1064B.** In addition, smartphone **1052B** may be on furniture inside the room. Tablet **1064B** and smartphone **1052B** may each include a receiver either embedded to each electronic device or as a separate adapter connected to tablet **1064B** and smartphone **1052B.** Receiver may include all the components described in **FIG. 11****.** A transmitter **1002B** may be hanging on one of the walls of the room right behind user. Transmitter **1002B** may also include all the components described in **FIG. 11****.** As user may seem to be obstructing the path between receiver and transmitter **1002B,** RF waves **1042B** may not be easily aimed to each receiver in a line of sight fashion. However, since the short signals generated from receivers may be omni-directional for the type of antenna elements used, these signals may bounce over the walls until they find transmitter **1002B.** Almost instantly, a micro-controller which may reside in transmitter **1002B,** may recalibrate the transmitted signals, based on the received signals sent by each receiver, by adjusting gain and phases and forming a convergence of the power transmission waves such that they add together and strengthen the energy concentrated at that location - in contrast to adding together in a way to subtract from each other and diminish the energy concentrated at that location, which is called "destructive interference" and conjugates of the signal phases received from the receivers and further adjustment of transmit antenna phases taking into account the built-in phase of antenna elements. Once calibration is performed, transmitter **1002B** may focus RF waves following the most efficient paths. Subsequently, a pocket of energy **1060B** may form on tablet **1064B** and another pocket of energy **1060B** in smartphone **1052B** while taking into account obstacles such as user and furniture. The foregoing property may be beneficial in that wireless power transmission using multiple pocket-forming **1000B** may inherently be safe as transmission along each pocket of energy is not very strong, and that RF transmissions generally reflect from living tissue and do not penetrate.

Once transmitter **1002B** identities and locates receiver, a channel or path can be established by knowing the gain and phases coming from receiver. Transmitter **1002B** may start to transmit controlled RF waves **1042B** that may converge in three-dimensional space by using a minimum of two antenna elements. These RF waves **1042B** may be produced using an external power source and a local oscillator chip using a suitable piezoelectric material. RF waves **1042B** may be controlled by RFIC that may include a proprietary chip for adjusting phase and/or relative magnitudes of RF signals, which may serve as inputs for antenna elements to form constructive and destructive interference patterns (pocket-forming). Pocket-forming may take advantage of interference to change the directionality of the antenna elements where constructive interference generates a pocket of energy and deconstructive interference generates a null in a particular physical location.. Receiver may then utilize pocket of energy produced by pocket-forming for charging or powering an electronic device, for example a laptop computer and a smartphone and thus effectively providing wireless power transmission.

Multiple pocket-forming **1000B** may be achieved by computing the phase and gain from each antenna of transmitter to each receiver. The computation may be calculated independently because multiple paths may be generated by antenna elements from transmitter to antenna elements from receiver.

An example of the computation for at least two antenna elements may include determining the phase of the signal from the receiver and applying the conjugate of the receive parameters to the antenna elements for transmission.

In some embodiments, two or more receivers may operate at different frequencies to avoid power losses during wireless power transmission. This may be achieved by including an array of multiple embedded antenna elements in transmitter **1002B.** In one embodiment, a single frequency may be transmitted by each antenna in the array. In other embodiments some of the antennas in the array may be used to transmit at a different frequency. For example, 1/2 of the antennas in the array may operate at 2.4 GHz while the other 1/2 may operate at 5.8 GHz. In another example, 1/3 of the antennas in the array may operate at 900 MHz, another 1/3 may operate at 2.4 GHz, and the remaining antennas in the array may operate at 5.8 GHz.

In another embodiment, each array of antenna elements may be virtually divided into one or more antenna elements during wireless power transmission, where each set of antenna elements in the array can transmit at a different frequency. For example, an antenna element of the transmitter may transmit power transmission signals at 2.4 GHz, but a corresponding antenna element of a receiver may be configured to receive power transmission signals at 5.8 GHz. In this example, a processor of the transmitter may adjust the antenna element of the transmitter to virtually or logically divide the antenna elements in the array into a plurality patches that may be fed independently. As a result, 1/4 of the array of antenna elements may be able to transmit the 5.8 GHz needed for the receiver, while another set of antenna elements may transmit at 2.4 GHz. Therefore, by virtually dividing an array of antenna elements, electronic devices coupled to receivers can continue to receive wireless power transmission. The foregoing may be beneficial because, for example, one set of antenna elements may transmit at about 2.4 GHz and other antenna elements may transmit at 5.8 GHz, and thus, adjusting a number of antenna elements in a given array when working with receivers operating at different frequencies. In this example, the array is divided into equal sets of antenna elements (e.g., four antenna elements), but the array may be divided into sets of different amounts of antenna elements. In an alternative embodiment, each antenna element may alternate between select frequencies.

The efficiency of wireless power transmission as well as the amount of power that can be delivered (using pocket-forming) may be a function of the total number of antenna elements **1006** used in a given receivers and transmitters system. For example, for delivering about one watt at about 15 feet, a receiver may include about 80 antenna elements while a transmitter may include about 256 antenna elements. Another identical wireless power transmission system (about 1 watt at about 15 feet) may include a receiver with about 40 antenna elements, and a transmitter with about 512 antenna elements. Reducing in half the number of antenna elements in a receiver may require doubling the number of antenna elements in a transmitter. In some embodiments, it may be beneficial to put a greater number of antenna elements in transmitters than in a receivers because of cost, because there will be much fewer transmitters than receivers in a system-wide deployment. However, the opposite can be achieved, e.g., by placing more antenna elements on a receiver than on a transmitter as long as there are at least two antenna elements in a transmitter **1002B.**

### II. TRANSMITTERS - SYSTEMS AND METHODS FOR WIRELESS POWER TRANSMISSIONS

Transmitters may be responsible for the pocket-forming, adaptive pocket-forming and multiple pocket-forming using the components described below. Transmitters may transmit wireless power transmission signals to receivers in the form of any physical media capable of propagating through space and being converted into useable electrical energy; examples may include RF waves, infrared, acoustics, electromagnetic fields, and ultrasound. It should be appreciated by those skilled in the art that power transmission signals may be most any radio signal, having any frequency or wavelength. Transmitters are described within with reference to RF transmissions, only as an example, and not to limit the scope to RF transmission only.

Transmitters may be located in number of locations, surfaces, mountings, or embedded structures, such as, desks, tables, floors, walls, and the like. In some cases, transmitters may be located in a client computing platforms, which may be any computing device comprising processors and software modules capable of executing the processes and tasks described herein. Non-limiting examples of client computing platforms may include a desktop computer, a laptop computer, a handheld computer, a tablet computing platform, a netbook, a smartphone, a gaming console, and/or other computing platforms. In other embodiments, the client computing platforms may be a variety of electronic computing devices. In such embodiments, each of the client computing platforms may have distinct operating systems, and/or physical components. The client computing platforms may be executing the same operating system and/or the client computing platforms may be executing different operating systems. The client computing platforms and or devices may be capable of executing multiple operating systems. In addition, box transmitters may contain several arrangements of printed circuit board (PCB) layers, which may be oriented in X, Y, or Z axis, or in any combination of these.

It should be appreciated that wireless charging techniques are not limited to RF wave transmission techniques, but may include alternative or additional techniques for transmitting energy to a receiver converting the transmitted energy to electrical power. Non-limiting exemplary transmission techniques for energy that can be converted by a receiving device into electrical power may include: ultrasound, microwave, resonant and inductive magnetic fields, laser light, infrared, or other forms of electromagnetic energy. In the case of ultrasound, for example, one or more transducer elements may be disposed so as to form a transducer array that transmits ultrasound waves toward a receiving device that receives the ultrasound waves and converts them to electrical power. In the case of resonant or inductive magnetic fields, magnetic fields are created in a transmitter coil and converted by a receiver coil into electrical power.

### A. Components of Transmitter Devices

**FIG. 11** illustrates a diagram of a system **1100** architecture for wirelessly charging client devices, according to an exemplary embodiment. The system **1100** may comprise a transmitter **1101** and a receiver **1120** that may each comprise an application-specific integrated circuit (ASIC). The transmitter **1101** ASIC may include one or more printed circuit boards (PCB) **1104,** one or more antenna elements **1106,** one or more radio frequency integrated circuits (RFIC) **1108,** one or more microcontrollers (MCs) **1110,** a communication component **1112,** a power source **1114.** The transmitter **1101** may be encased in a housing, which may allocate all the requested components for transmitter **1101.** Components in transmitter **1101** may be manufactured using meta-materials, micro-printing of circuits, nano-materials, and/or any other materials. It should be obvious to someone skilled in the art that the entire transmitter or the entire receiver can be implemented on a single circuit board, as well as having one or more of the functional blocks implemented in separate circuit boards.

### 1. Printed Circuit Boards

In some implementations, the transmitter **1101** may include a plurality of PCB **1104** layers, which may include antenna element **1106** and/or RFIC **1108** for providing greater control over pocket-forming and may increase response for targeting receivers. The PCB **1104** may mechanically support and electrically connect the electronic component described herein using conductive tracks, pads and/or other features etched from copper sheets laminated onto a non-conductive substrate. PCBs may be single sided (one copper layer), double sided (two copper layers), and/or multi-layer. Multiple PCB **1104** layers may increase the range and the amount of power that could be transferred by transmitter **1101.** PCB **1104** layers may be connected to a single MC **1110** and/or to dedicated MCs **1110.** Similarly, RFIC **1108** may be connected to antenna element **1106** as depicted in the foregoing embodiments.

In some implementations, a box transmitter, including a plurality of PCB **1104** layers inside it may include antenna element **1108** for providing greater control over pocket-forming and may increase the response for targeting receivers. Furthermore, range of wireless power transmission may be increased by the box transmitter. Multiple PCB **1104** layers may increase the range and the amount of power waves (e.g., RF power waves, ultrasound waves) that could be transferred and/or broadcasted wirelessly by transmitter **1101** due the higher density of antenna element **1106.** The PCB **1104** layers may be connected to a single microcontroller **1110** and/or to dedicated microcontroller **1110** for each antenna element **1106.** Similarly, RFIC **1108** may control antenna element **1101** as depicted in the foregoing embodiments. Furthermore, box shape of transmitter **1101** may increase action ratio of wireless power transmission.

### 2. Antenna Elements

Antenna element **1106** may be directional and/or omni-directional and include flat antenna elements, patch antenna elements, dipole antenna elements, and any other suitable antenna for wireless power transmission. Suitable antenna types may include, for example, patch antennas with heights from about 1/8 inch to about 6 inches and widths from about 1/8 inch to about 6 inches. The shape and orientation of antenna element **1106** may vary in dependency of the desired features of transmitter **1101;** orientation may be flat in X, Y, and Z axis, as well as various orientation types and combinations in three dimensional arrangements. Antenna element **1106** materials may include any suitable material that may allow RF signal transmission with high efficiency, good heat dissipation and the like. The amount of antenna elements **1106** may vary in relation with the desired range and power transmission capability on transmitter **1101;** the more antenna elements **1106,** the wider range and higher power transmission capability.

Antenna element **1106** may include suitable antenna types for operating in frequency bands such as 900 MHz, 2.5 GHz or 5.8 GHz as these frequency bands conform to Federal Communications Commission (FCC) regulations part 18 (industrial, scientific, and medical equipment). Antenna element **1106** may operate in independent frequencies, allowing a multichannel operation of pocket-forming.

In addition, antenna element **1106** may have at least one polarization or a selection of polarizations. Such polarization may include vertical polarization, horizontal polarization, circularly polarized, left hand polarized, right hand polarized, or a combination of polarizations. The selection of polarizations may vary in dependency of transmitter **1101** characteristics. In addition, antenna element **1106** may be located in various surfaces of transmitter **1101.** Antenna element **1106** may operate in single array, pair array, quad array and any other suitable arrangement that may be designed in accordance with the desired application.

In some implementations, the entire side of the printed circuit board PCB **1104** may be closely packed with antenna element **1106.** The RFIC **1108** may connect to multiple antenna elements **1106.** Multiple antenna elements **1106** may surround a single RFIC **1108.**

### 3. Radio Frequency Integrated Circuits

The RFIC **1108** may receive an RF signal from the MC **1110,** and split the RF signal into multiple outputs, each output linked to an antenna element **1106.** For example, each RFIC **1108** may be connected to four antenna elements **1106.** In some implementations, each RFIC **1108** may be connected to eight, sixteen, and/or multiple antenna elements **1106.**

The RFIC **1104** may include a plurality of RF circuits that may include digital and/or analog components, such as, amplifiers, capacitors, oscillators, piezoelectric crystals and the like. RFIC **1104** may control features of antenna element **1106,** such as gain and/or phase for pocket-forming and manage it through direction, power level, and the like. The phase and the amplitude of pocket-forming in each antenna element **1106** may be regulated by the corresponding RFIC **1108** in order to generate the desired pocket-forming and transmission null steering. In addition, RFIC **1108** may be connected to MC **1110,** which may utilize digital signal processing (DSP), ARM, PIC-Class microprocessor, central processing unit, computer, and the like. The lower number of RFICs **1108** present in the transmitter **1101** may correspond to desired features such as lower control of multiple pocket-forming, lower levels of granularity, and a less expensive embodiment. In some implementations, RFIC **1108** may be coupled to one or more MCs **1110,** and MC **1110** may be included into an independent base station or into the transmitter **1101.**

In some implementations of transmitter **1101,** the phase and the amplitude of each pocket-forming in each antenna element **1106** may be regulated by the corresponding RFIC **1108** in order to generate the desired pocket-forming and transmission null steering. RFIC **1108** singled coupled to each antenna element **1106** may reduce processing requirement and may increase control over pocket-forming, allowing multiple pocket-forming and a higher granular pocket-forming with less load over MC **1110,** and a higher response of higher number of multiple pocket-forming may be allowed. Furthermore, multiple pocket-forming may charge a higher number of receivers and may allow a better trajectory to such receivers.

RFIC **1108** and antenna element **1106** may operate in any suitable arrangement that may be designed in accordance with the desired application. For example, transmitter **1101** may include antenna element **1106** and RFIC **1108** in a flat arrangement. A subset of 4, 8, 16, and/or any number of antenna elements **1106** may be connected to a single RFIC **1108.** RFIC **1108** may be directly embedded behind each antenna element **1106;** such integration may reduce losses due the shorter distance between components. In some implementations, a row or column of antenna elements **1106** may be connected to a single MC **1110.** RFIC **1108** connected to each row or column may allow a less expensive transmitter **1101** that may produce pocket-forming by changing phase and gain between rows or columns. In some implementations, the RFIC **1108** may output between 2 - 8 volts of power for the receiver **1120** to obtain.

In some implementations, a cascade arrangement of RFICs **1108** may be implemented. A flat transmitter **1101** using a cascade arrangement of RFICs **1108** may provide greater control over pocket-forming and may increase response for targeting receivers **1106,** as well as a higher reliability and accuracy may be achieved because multiple redundancy of RFICs **1108.**

### 4. Microcontrollers

The MC **1110** may comprise a processor running ARM and/or DSP. ARM is a family of general purpose microprocessors based on a reduced instruction set computing (RISC). A DSP is a general purpose signal processing chip may provide a mathematical manipulation of an information signal to modify or improve it in some way, and can be characterized by the representation of discrete time, discrete frequency, and/or other discrete domain signals by a sequence of numbers or symbols and the processing of these signals. DSP may measure, filter, and/or compress continuous real-world analog signals. The first step may be conversion of the signal from an analog to a digital form, by sampling and then digitizing it using an analog-to-digital converter (ADC), which may convert the analog signal into a stream of discrete digital values. The MC **1110** may also run Linux and/or any other operating system. The MC **1110** may also be connected to Wi-Fi in order to provide information through a network **1140.**

MC **1110** may control a variety of features of RFIC **1108** such as, time emission of pocket-forming, direction of the pocket-forming, bounce angle, power intensity and the like. Furthermore, MC **1110** may control multiple pocket-forming over multiple receivers or over a single receiver. Transmitter **1101** may allow distance discrimination of wireless power transmission. In addition, MC **1110** may manage and control communication protocols and signals by controlling communication component **1112.** MC **1110** may process information received by communication component **1112** that may send and receive signals to and from a receiver in order to track it and concentrate radio frequency signals **1142** (i.e., pockets of energy) on it. Other information may be transmitted from and to receiver **1120;** such information may include authentication protocols among others through a network **1140.**

The MC **1110** may communicate with the communication component **1112** through serial peripheral interface (SPI) and/or inter-integrated circuit (I²C) protocol. SPI communication may be used for short distance, single master communication, for example in embedded systems, sensors, and SD cards. Devices communicate in master/slave mode where the master device initiates the data frame. Multiple slave devices are allowed with individual slave select lines. I²C is a multi-master, multi-slave, single-ended, serial computer bus used for attaching low-speed peripherals to computer motherboards and embedded systems

### 5. Communications Component

Communication component **1112** may include and combine Bluetooth technology, infrared communication, Wi-Fi, FM radio among others. MC **1110** may determine optimum times and locations for pocket-forming, including the most efficient trajectory to transmit pocket forming in order to reduce losses because obstacles. Such trajectory may include direct pocket-forming, bouncing, and distance discrimination of pocket-forming. In some implementations, the communication component **1112** may communicate with a plurality of devices, which may include receivers **1120,** client devices, or other transmitters **1101.**

### 6. Power Source

Transmitters **1101** may be fed by a power source **1114** that may include AC or DC power supply. Voltage, power, and current intensity provided by power source **1114** may vary in dependency with the required power to be transmitted. Conversion of power to radio signal may be managed by MC **1110** and carried out by RFIC **1108** that may utilize a plurality of methods and components to produce radio signals in a wide variety of frequencies, wavelength, intensities, and other features. As an exemplary use of a variety of methods and components for radio signal generation, oscillators and piezoelectric crystals may be used to create and change radio frequencies in different antenna elements **1106.** In addition, a variety of filters may be used for smoothing signals as well as amplifiers for increasing power to be transmitted.

Transmitter **1101** may emit RF power waves that are pocket-forming with a power capability from few watts to a predetermined number of watts required by a particular chargeable electronic device. Each antenna may manage a certain power capacity. Such power capacity may be related with the application

### 7. Housing

In addition to a housing, an independent base station may include MC **1110** and power source **1114,** thus, several transmitters **1101** may be managed by a single base station and a single MC **1110.** Such capability may allow the location of transmitters **1101** in a variety of strategic positions, such as ceiling, decorations, walls, and the like. Antenna elements **1106,** RFIC **1108,** MC **1110,** communication component **1112,** and power source **1114** may be connected in a plurality of arrangements and combinations, which may depend on the desired characteristics of transmitter **1101.**

### B. Exemplary Method of Transmitting Power

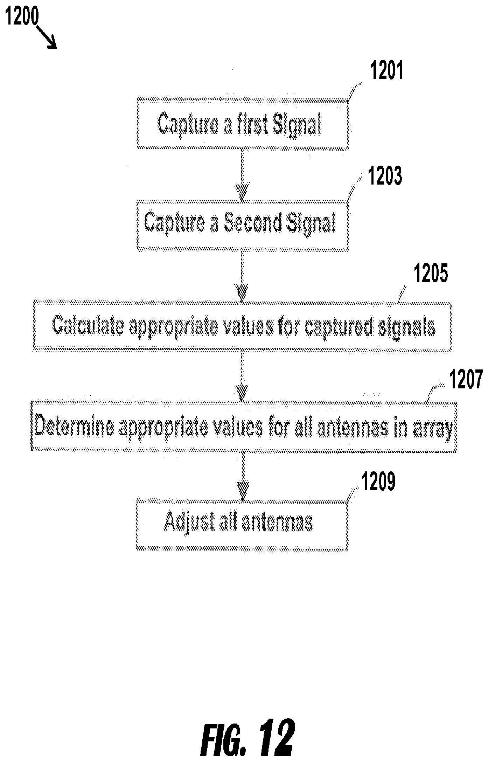

**FIG. 12** is a method for determining receiver location **1200** using antenna element. Method for determining receiver location **1200** may be a set of programmed rules or logic managed by MC. The process may begin step **1201** by capturing first signal with a first subset of antennas from the antenna array. The process may follow immediately by switching to a different subset of antenna element and capturing, at a next step **1203,** a second signal with a second subset of antennas. For example, a first signal may be captured with a row of antennas and the second capturing may be done with a column of antennas. A row of antennas may provide a horizontal degree orientation such an azimuth in a spherical coordinate system. A column of antennas may provide a vertical degree orientation such as elevation. Antenna elements used for capturing first signal and capturing second signal may be aligned in straight, vertical, horizontal, or diagonal orientation. The first subset and second subset of antennas may be aligned in a cross like structure in order to cover degrees around transmitter.

Once both vertical and horizontal values have been measured, the MC may, in a next step **1205,** determine the appropriate values of phase and gain for the vertical and horizontal antenna elements used to capture the signal. Appropriate values for phase and gain may be determined by the relationship of the position of the receiver to the antenna. The values may be used by MC in order to adjust antenna elements to form pockets of energy that may be used by a receiver in order to charge an electronic device.

Data pertaining to initial values of all antenna elements in transmitter may be calculated and stored previously for use by MC in order to assist in the calculation of appropriate values for antenna elements. In a next step, **1207,** after the appropriate values for the vertical and horizontal antennas used for capturing the signal have been determined, the process may continue by using the stored data to determine appropriate values for all the antennas in the array. Stored data may contain initial test values of phase and gain for all antenna elements in the array at different frequencies. Different sets of data may be stored for different frequencies and MC may select the appropriate data set accordingly. In a next step **1209,** MC may then adjust all antennas through RFIC in order to form pockets of energy at the appropriate locations.

### C. Array Subset Configuration

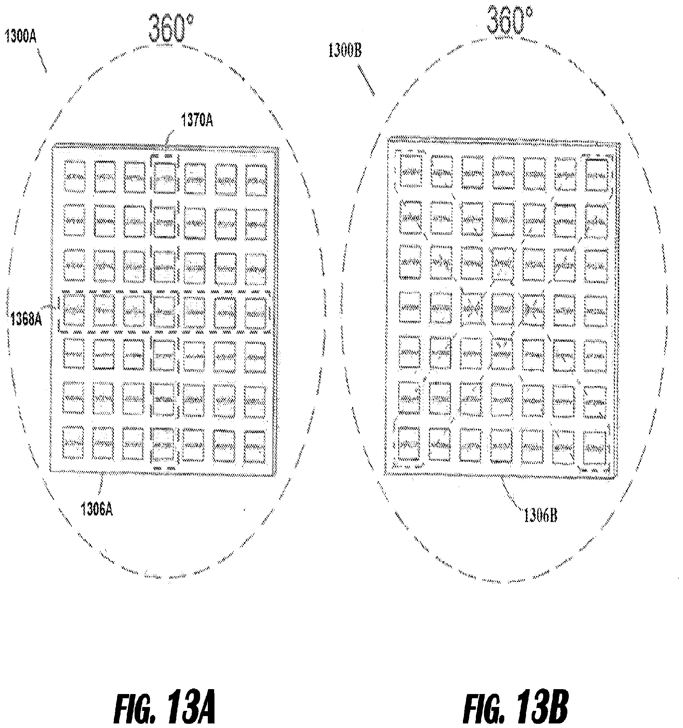

**FIG. 13A** illustrates an example embodiment of an array subset configuration 1300A that may be used in method for determining receiver location. Transmitter may include an array of antennas **1306A.** A row of antennas **1368A** may be used first for capturing a signal sent by a receiver. Row of antennas **1368A** may then transfer the signal to the RFIC, where the signal may be converted from a radio signal to a digital signal and passed on to MC for processing. MC may then determine appropriate adjustments for phase and gain in row of antennas **1368A** in order to form pockets of energy at the appropriate locations based on the receiver locations. A second signal may be captured by a column of antennas **1370A.** Column of antennas **1370A** may then transfer the signal to the RFIC, where the signal may be converted from a radio signal to a digital signal and passed on to MC for processing. MC may then determine appropriate adjustments for phase and gain in column of antennas **1370A** in order to form pockets of energy at the appropriate locations based on the receiver locations. Once the appropriate adjustments have been determined for row of antennas **1368A** and column of antennas **1370A** MC may determine the appropriate values for the rest of antenna elements **1306A** in array of antennas **1368A** by using previously stored data about the antennas and adjusting accordingly with the results from row of antennas **1368A** and column of antennas **1370A.**

### D. Configurations for Transmitters, Transmitter Components, Antenna Tiles, and Systems Related to Transmitters

### 1. Exemplary System

**FIG. 13B** illustrates another example embodiment of an array subset configuration **1300B.** In array subset configuration **1300B,** both initial signals are captured by two diagonal subsets of antennas. The process follows the same path, such that each subset is adjusted accordingly. Based on adjustments made and the previously stored data, the rest of antenna elements **1306B** in array of antennas are adjusted.

### 2. Flat Transmitter

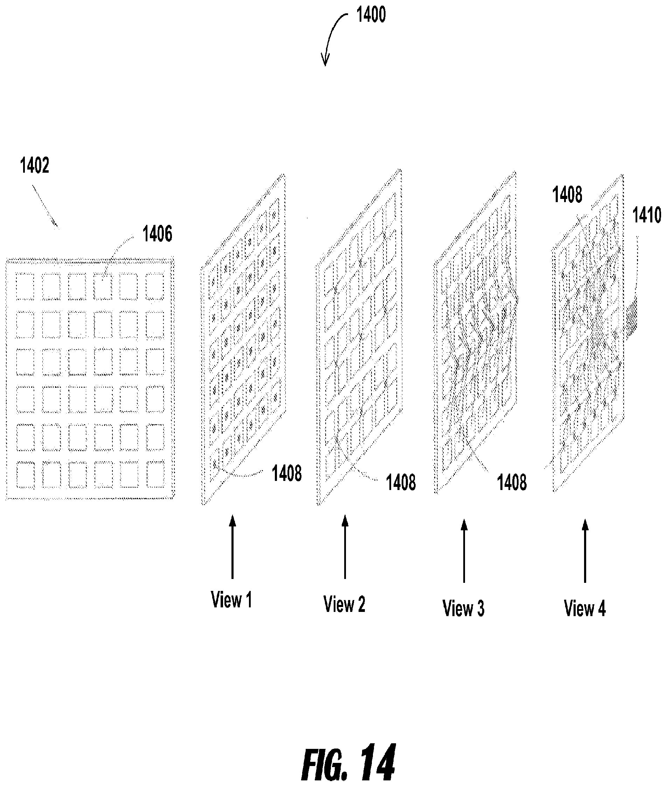

**FIG. 14** depicts a flat transmitter **1402** in a front view and a several embodiments of rear views. Transmitter **1402** may include antenna element **1406** and RFIC **1408** in a flat arrangement. RFIC **1408** may be directly embedded behind each antenna element **1406;** such integration may reduce losses due the shorter distance between components.

In one embodiment (i.e., View 1) in transmitter **1402,** the phase and the amplitude of the pocket-forming for each antenna element **1406** may be regulated by the corresponding RFIC **1408** in order to generate the desired pocket-forming and transmission null steering. RFIC **1408** singled coupled to each antenna element **1406** may reduce processing requirement and may increase control over pocket-forming, allowing multiple pocket-forming and a higher granular pocket-forming with less load over MC **1410;** thus, a higher response of higher number of multiple pocket-forming may be allowed. Furthermore, multiple pocket-forming may charge a higher number of receivers and may allow a better trajectory to such receivers. As described in the embodiment of **FIG. 11****,** RFIC **1408** may be coupled to one or more MCs **1410,** and microcontroller **1410** may be included into an independent base station or into the transmitter **1402.**

In another embodiment (i.e., View 2), a subset of 4 antenna elements **1406** may be connected to a single RFIC **1408.** The lower number of RFICs **1408** present in the transmitter **1402** may correspond to desired features such as: lower control of multiple pocket-forming, lower levels of granularity and a. less expensive embodiment. As described in the embodiment of **FIG. 11****,** RFIC **1408** may be coupled to one or more MCs **1410,** and microcontroller **1410** may be included into an independent base station or into the transmitter **1402.**

In yet another embodiment (i.e., View 3), transmitter **1402** may include antenna element **1406** and RFIC **1408** in a flat arrangement. A row or column of antenna elements **1406** may be connected to a single MC **1410.** The lower number of RFICs **1408** present in the transmitter **1402** may correspond to desired features such as: lower control of multiple pocket-forming, lower levels of granularity and a less expensive embodiment. RFIC **1408** connected to each row or column may allow a less expensive transmitter **1402,** which may produce pocket-forming by changing phase and gain between rows or columns. As described in the embodiment of **FIG. 11****,** RFIC **1408** may be coupled to one or more MCs **1410,** and microcontroller **1410** may be included into an independent base station or into the transmitter **1402.**

In some embodiments (i.e., View 4), transmitter **1402** may include antenna element **1406** and RFIC **1408** in a flat arrangement. A cascade arrangement is depicted in this exemplary embodiment. Two antenna elements **1406** may be connected to a single RFIC **1408** and this in turn to a single RFIC **1408,** which may be connected to a final RFIC **1408** and this in turn to one or more MCs **1410.** Flat transmitter **1402** using a cascade arrangement of RFICs **1408** may provide greater control over pocket-forming and may increase response for targeting receivers. Furthermore, a higher reliability and accuracy may be achieved because multiple redundancy of RFICs **1408.** As described in the embodiment of **FIG. 11****,** RFIC **1408** may be coupled to one or more MCs **1410,** and microcontroller **1410** may be included into an independent base station or into the transmitter **1402.**

### 3. Multiple Printed Circuit Board Layers

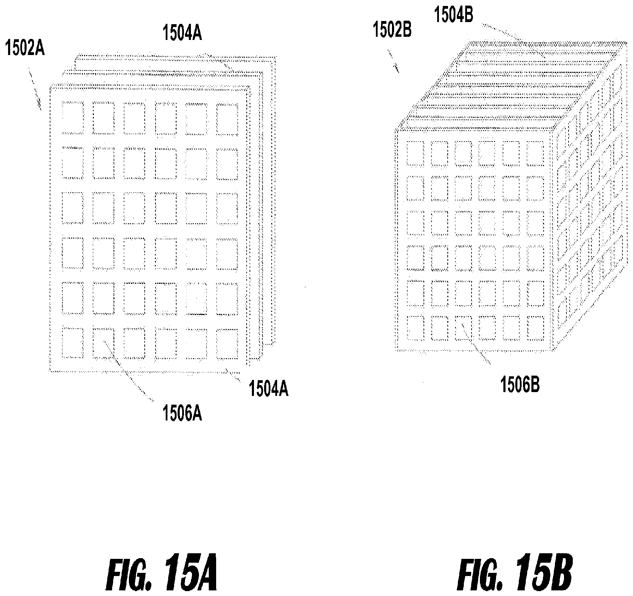

**FIG. 15A** depicts a transmitter **1502A,** which may include a plurality of PCB layers **1204A** that may include antenna element **1506A** for providing greater control over pocket-forming and may increase response for targeting receivers. Multiple PCB layers **1504A** may increase the range and the amount of power that could be transferred by transmitter **1502A.** PCB layers **1504A** may he connected to a single MC or to dedicated MC. Similarly, RFIC may be connected antenna element **1506A** as depicted in the foregoing embodiments. RFIC may be coupled to one or more MCs. Furthermore, MCs may be included into an independent base station or into the transmitter **1502A.**

### 4. Box Transmitter

**FIG. 15B** depicts a box transmitter **1502B,** which may include a plurality of PCB layers **1504B** inside it, which may include antenna element **1506B** for providing greater control over pocket-forming and may increase response for targeting receivers. Furthermore, range of wireless power transmission may be increased by the box transmitter **1502B.** Multiple PCB layers **1504B** may increase the range and the amount of RF power waves that could be transferred or broadcasted wirelessly by transmitter **1502B** due the higher density of antenna element **1506B.** PCB layers **1504B** may be connected to a single MC or to dedicated MC for each antenna element **1506B.** Similarly, RFIC may control antenna element **1506B** as depicted in the foregoing embodiments. Furthermore, box shape of transmitter 800 may increase action ratio of wireless power transmission; thus, box transmitter **1502B** may be located on a plurality of surfaces such as, desks, tables, floors, and the like. In addition, box transmitter **1502B** may comprise several arrangements of PCB layers **1504B,** which may be oriented in X, Y, and Z axis, or any combination these. The RFIC may, be coupled to one or more MCs. Furthermore, MCs may be included into an independent base station or into the transmitter **1502B.**

### 5. Irregular Arrays for Various Types of Products

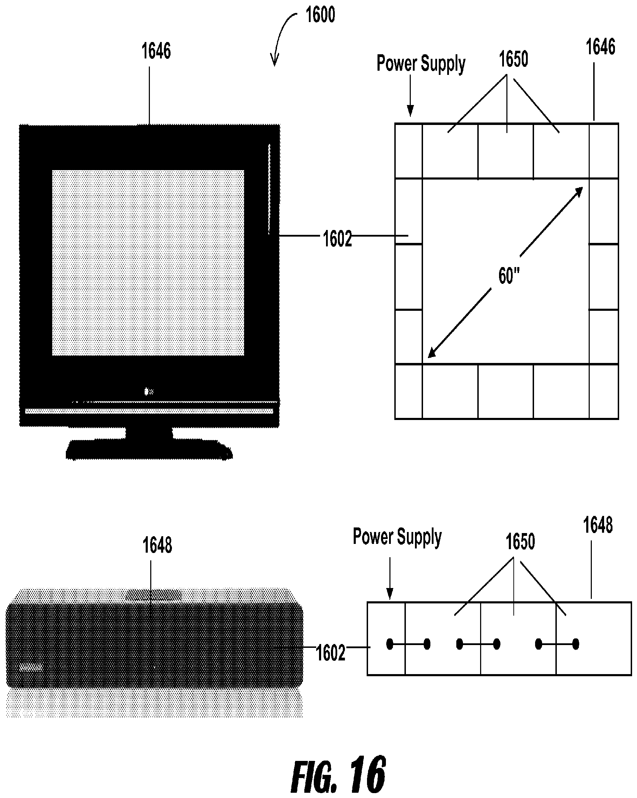

**FIG. 16** depicts a diagram of architecture **1600** for incorporating transmitter **1602** into different devices. For example, the flat transmitter **1602** may be applied to the frame of a television **1646** or across the frame of a sound bar **1648.** Transmitter **1602** may include multiple tiles **1650** with antenna elements and RFICs in a flat arrangement. The RFIC may be directly embedded behind each antenna elements; such integration may reduce losses due the shorter distance between components.

For example, a television **1646** may have a bezel around a television **1646,** comprising multiple tiles **1650,** each tile comprising of a certain number of antenna elements. For example, if there are 20 tiles **1650** around the bezel of the television **1646,** each tile **1650** may have 24 antenna elements and/or any number of antenna elements.

In tile **1650,** the phase and the amplitude of each pocket-forming in each antenna element may be regulated by the corresponding RFIC in order to generate the desired pocket-forming and transmission null steering. RFIC singled coupled to each antenna element may reduce processing requirement and may increase control over pocket-forming, allowing multiple pocket-forming and a higher granular pocket-forming with less load over microcontroller, thus, a higher response of higher number of multiple pocket-forming may be allowed. Furthermore, multiple pocket-forming may charge a higher number of receivers and may allow a better trajectory to such receivers.

RFIC may be coupled to one or more microcontrollers, and the microcontrollers may be included into an independent base station or into the tiles **1650** in the transmitter **1602.** A row or column of antenna elements may be connected to a single microcontroller. In some implementations, the lower number of RFICs present in the transmitters **1602** may correspond to desired features such as: lower control of multiple pocket-forming, lower levels of granularity and a less expensive embodiment. RFICs connected to each row or column may allow reduce costs by having fewer components because fewer RFICs are required to control each of the transmitters **1602.** The RFICs may produce pocket-forming power transmission waves by changing phase and gain, between rows or columns.

In some implementations, the transmitter **1602** may use a cascade arrangement of tiles **1650** comprising RFICs that may provide greater control over pocket-forming and may increase response for targeting receivers. Furthermore, a higher reliability and accuracy may be achieved from multiple redundancies of RFICs.

In one embodiment, a plurality of PCB layers, including antenna elements, may provide greater control over pocket-forming and may increase response for targeting receivers. Multiple PCB layers may increase the range and the amount of power that could be transferred by transmitter **1602.** PCB layers may be connected to a single microcontroller or to dedicated microcontrollers. Similarly, RFIC may be connected to antenna elements.

A box transmitter **1602** may include a plurality of PCB layers inside it, which may include antenna elements for providing greater control over pocket-forming and may increase response for targeting receivers. Furthermore, range of wireless power transmission may be increased by the box transmitter **1602.** Multiple PCB layers may increase the range and the amount of RF power waves that could be transferred or broadcasted wirelessly by transmitter **1602** due the higher density of antenna elements. PCB layers may be connected to a single microcontroller or to dedicated microcontrollers for each antenna element. Similarly, RFIC may control antenna elements. The box shape of transmitter **1602** may increase action ratio of wireless power transmission. Thus, box transmitter **1602** may be located on a plurality of surfaces such as, desks, tables, floors, and the like. In addition, box transmitter may comprise several arrangements of PCB layers, which may be oriented in X, Y, and Z axis, or any combination these.

### 6. Plurality of antenna elements

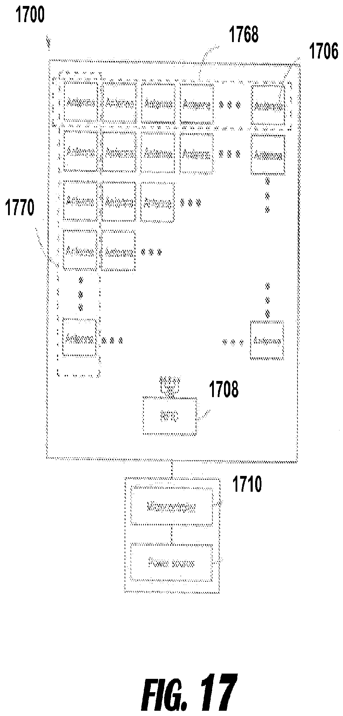

**FIG. 17** is an example of a transmitter configuration **1700** that includes a plurality of antenna elements **1706.** Antenna element **1706** may form an array by arranging rows of antennas **1768** and columns of antennas **1770.** Transmitter configuration may include at least one RFIC **1708** to control features of antenna element **1706,** such as gain and/or phase for pocket-forming and manage it through direction, power level, and the like. The array of antenna elements **1706** may be connected to a MC **1710,** which may determine optimum times and locations for pocket-forming, including the most efficient trajectory to transmit pocket forming in order to reduce losses because of obstacles. Such trajectory may include direct pocket-forming, bouncing, and distance discrimination of pocket-forming.

A transmitter device may utilize antenna element **1706** to determine the location of a receiver in order to determine how to adjust antenna element **1706** to form pockets of energy in the appropriate location. A receiver may send a train signal to transmitter in order to provide information. The train signal may be any conventional know signals that may be detected by antenna element **1706.** The signal sent by receiver may contain information such as phase and gain.

### III. RECEIVERS - SYSTEMS AND METHODS FOR RECEIVING AND UTILIZING WIRELESS POWER TRANSMISSIONS

### A. Components of Receiver Devices

Returning to **FIG. 11****,** which illustrates a diagram of a system **1100** architecture for wirelessly charging client devices, according to an exemplary embodiment, the system **1100** may comprise transmitter **1101** and receivers **1120** that may each comprise an application-specific integrated circuit (ASIC). The ASIC of the receivers **1120** may include a printed circuit board **1122,** an antenna element **1124,** a rectifier **1126,** a power converter **1129,** a communications component **1130,** and/or a power management integrated circuit (PMIC) **1132.** Receivers **1120** may also comprise a housing that may allocate all the requested components. The various components of receivers **1120** may comprise, or may be manufactured using, meta-materials, micro-printing of circuits, nano-materials, and the like.

### 1. Antenna Elements

Antenna elements **1124** may include suitable antenna types for operating in frequency bands similar to the bands described for antenna elements **1106** of a transmitter **1101.** Antenna element **1124** may include vertical or horizontal polarization, right hand or left hand polarization, elliptical polarization, or other suitable polarizations as well as suitable polarization combinations. Using multiple polarizations can be beneficial in devices where there may not be a preferred orientation during usage or whose orientation may vary continuously through time, for example a smartphone or portable gaming system. On the contrary, for devices with well-defined orientations, for example a two-handed video game controller, there might be a preferred polarization for antennas, which may dictate a ratio for the number of antennas of a given polarization. Suitable antenna types may include patch antennas with heights from about 118 inch to about 6 inches and widths from about 1/8 inch to about 6 inches. Patch antennas may have the advantage that polarization may depend on connectivity, i.e., depending on which side the patch is fed, the polarization may change. This may further prove advantageous as a receiver, such as receiver **1120,** may dynamically modify its antenna polarization to optimize wireless power transmission. Different antenna, rectifier, or power converter arrangements are possible for a receiver, as is described in the embodiments herein.

### 2. Rectifiers

A rectifier **1126** may convert alternating current (AC), which periodically reverses direction, to direct current (DC), which takes non-negative values. Because of the alternating nature of the input AC sine wave, the process of rectification alone produces a DC current that, though non-negative, consists of pulses of current. The output of the rectifier may be smoothed by an electronic filter to produce a steady current. The rectifier **1126** may include diodes and/or resistors, inductors and/or capacitors to rectify the alternating current (AC) voltage generated by antenna element **1124** to direct current (DC) voltage.

In some implementations, the rectifier **1126** may be a full-wave rectifier. A full-wave rectifier may convert the whole of the input waveform to one of constant polarity (positive or negative) at its output. Full-wave rectification may convert both polarities of the input waveform to pulsating DC (direct current), and yield a higher average output voltage. Two diodes and a center tapped transformer and/or four diodes in a bridge configuration and any AC source (including a transformer without center tap) may be utilized for a full-wave rectifier. For single-phase AC, if the transformer is center-tapped, then two diodes back-to-back (cathode-to-cathode or anode-to-anode, depending upon output polarity required) may be utilized to form a full-wave rectifier. Twice as many turns may be required on the transformer secondary to obtain the same output voltage than for a bridge rectifier, but the power rating is unchanged. Rectifier **1126** may be placed as close as is technically possible to antenna element **1124** to minimize losses. After rectifying AC voltage, DC voltage may be regulated using power converter **1129.**

### 3. Power Converters

Power converter **1129** can be a DC-to-DC converter that may help provide a constant voltage output and/or to help boost the voltage to the receiver **1120.** In some implementations, the DC-to-DC converter may be a maximum power point tracker (MPPT). A MPPT is an electronic DC-to-DC converter that converts a higher voltage DC output down to the lower voltage needed to charge batteries. Typical voltage outputs can be from about 5 volts to about 10 volts. In some embodiments, power converter **1129** may include electronic switched mode DC-to-DC converters, which can provide high efficiency. In such a case, a capacitor may be included before power converter **1129** to ensure sufficient current is provided for the switching device to operate. When charging an electronic device, for example a phone or laptop computer, initial high-currents that can exceed the minimum level of power needed to activate the operation of an electronic switched mode DC-to-DC converter, may be required. In such a case, a capacitor may be added at the output of receiver **1120** to provide the extra energy required. Afterwards, lower power can be provided, as required to provide the appropriate amount electric current; for example, 1/80 of the total initial power used while having the phone or laptop still building-up charge.

In one embodiment, multiple rectifiers **1126** can be connected in parallel to antenna element **1124.** For example, four rectifiers **1126** may be connected in parallel to antenna element **1124.** However, several more rectifiers **1126** can be used. This arrangement may be advantageous because each rectifier **1126** may only need to handle 1/4 of the total power. If one watt is to be delivered to an electronic device, then each rectifier **1126** may only need to handle a quarter of a watt. The arrangement may greatly diminish cost because using a plurality of low-power rectifiers **1126** can be cheaper than utilizing one high-power rectifier **1126** while handling the same amount of power. In some embodiments, the total power handled by rectifier **1126** can be combined into a power converter **1129.** In other embodiments, there may a power converter **1129** per each rectifier **1126.**

In other embodiments, multiple antenna elements **1124** may be connected in parallel to a rectifier **1126,** after which DC voltage may be regulated through a power converter **1129.** In this example, four antenna elements **1124** may be connected in parallel to a single rectifier **1126.** This arrangement may be advantageous because each antenna element **1124** may only handle 1/4 of the total power. In addition, the arrangement may enable usage of antenna element **1124** of different polarizations with a single rectifier **1126** because signals may not cancel each other. Because of the foregoing property, the arrangement may be suitable for electronic client devices with an orientation that is not well-defined or otherwise varies over time. Lastly, the arrangement may be beneficial when using antenna element **1124** of equal polarization and configured for phases that do not differ greatly. In some embodiments, however, there can be a rectifier **1126** per antenna element **1124** and/or multiple rectifiers **1126** per antenna element **1124.**

In an exemplary implementation, an arrangement where multiple antenna elements **1124** outputs can be combined and connected to parallel rectifiers **1126** whose output may further be combined in one power converter **1129** may be implemented. There may be 16 antenna elements **1124** whose output may be combined at four parallel rectifiers **1126.** In other embodiments, antenna elements **1124** may be subdivided into groups (of four for example) and may connect to independent rectifiers **1126.**

In yet another embodiment, an arrangement where groups of antenna elements **1124** may be connected to different rectifiers **1126** which may in turn also be connected to different power converters **1129** may be implemented. In this embodiment, four groups of antenna elements **1124** (each containing four antenna elements **1124** in parallel) may each connect independently to four rectifiers **1126.** In this embodiment, the output of each rectifier **1126** may connect directly to a power converter **1129** (four in total). In other embodiments, the output of all four rectifiers **1126** can be combined before each power converter **1129** to handle the total power in parallel. In some embodiments, the combined outputs of each rectifier **1126** may connect to a single power converter **1129.** This arrangement may be beneficial in that it allows great proximity between rectifier **1126** and antenna element **1124.** This property may be desirable as it may keep losses at a minimum.

### 4. Communications Component

A communications component **1130,** similar to that of transmitter **1101,** may be included in receiver **1120** to communicate with a transmitter or to other electronic equipment. In some implementations, receiver **1120** can use a built-in communications component of the device (for example, Bluetooth) for communicating to a given transmitter **1120** based on requirements provided by processor such as battery level, user predefined charging profile or others transmitters **1101** may include one or more printed circuit boards (PCB) **1104,** one or more antenna elements **1106,** one or more radio frequency integrated circuits (RFIC) **1108,** one or more microcontrollers (MCs) **1110,** a communication component **1112,** and a power source **1114.** The transmitter **1101** may be encased in a housing, which may allocate all the requested components for transmitter **1101.** Components in transmitter **1101** may be manufactured using meta-materials, micro-printing of circuits, nano-materials, and/or any other materials. The types of information communicated by the communications components between the receiver and the transmitter include but not limited to the present power levels in the batteries, signal strength and power level being received at the receiver, timing information, phase and gain information, user identification, client device privileges, security related signaling, emergency signaling, and authentication exchanges, among other things.

### 5. PMICs

A power management integrated circuit (PMIC) **1132** is an integrated circuit and/or a system block in a system-on-a-chip device for managing power requirements of the host system. The PMIC **1132** may include battery management, voltage regulation, and charging functions. It may include a DC-to-DC converter to allow dynamic voltage scaling. In some implementations, the PMIC **1132** may provide up to a 95% power conversion efficiency. In some implementations, the PMIC **1132** may integrate with dynamic frequency scaling in a combination. The PMIC **1132** may be implemented in a battery-operated device such as mobile phones and/or portable media players. In some implementations, the battery may be replaced with an input capacitor and an output capacitor. The PMIC **1132** may be directly connected to the battery and/or capacitors. When the battery is being charged directly, a capacitor may not be implemented. In some implementations, the PMIC **1132** may be coiled around the battery. The PMIC **1132** may comprise a power management chip (PMC) that acts as a battery charger, and is connected to the battery. The PMIC **1132** can use pulse-frequency modulation (PFM) and pulse-width modulation (PWM). It can use switching amplifier (Class-D electronic amplifier). In some implementations, an output converter, a rectifier, and/or a BLE may also be included in the PMIC **1132.**

### 6. Housing

Housing can be made of any suitable material that may allow for signal or wave transmission and/or reception, for example plastic or hard rubber. Housing may be an external hardware that may be added to different electronic equipment, for example in the form of cases, or can be embedded within electronic equipment as well.

### 7. Network

The network **1140** may comprise any common communication architecture that facilitates communication between transmitter **1101** and the receiver **1120.** One having ordinary skill in the art would appreciate that the network **1140** may be the Internet, a private intranet, or some hybrid of the two. It should also be obvious to one skilled in the art that the network components may be implemented in dedicated processing equipment, or alternatively in a cloud processing network.

### B. Configurations for Receivers, Receiver Components, and Systems Related to Receivers

### 1. Multiple Rectifiers Connected in Parallel to an Antenna Element

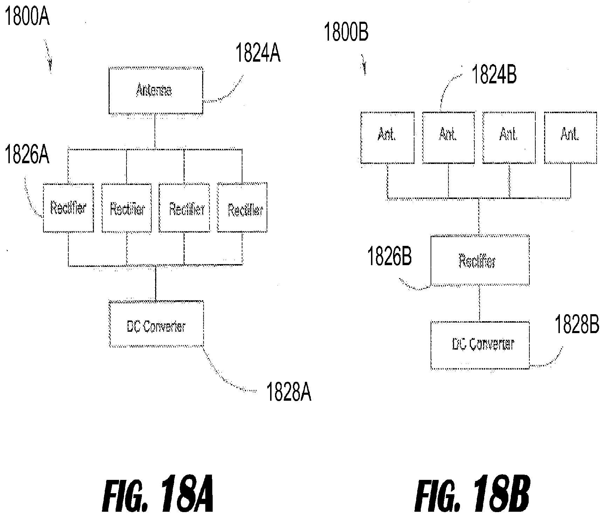

**FIG. 18A** illustrates an arrangement **1800A** where multiple rectifiers **1826A** can be connected in parallel to an antenna element **1824A.** In this example, four rectifiers **1826A** may be connected in parallel to an antenna elements **1824A.** However, several more rectifiers **1826A** may be used. Arrangement **1800A** may be advantageous because each rectifier **1826A** may only need to handle 1/4 of the total power. If one watt is to be delivered to an electronic device, then each rectifier **1826F** may only need to handle a quarter of a watt. Arrangement **1800A** may greatly diminish cost because using a plurality of low-power rectifiers **1826A** can be cheaper than utilizing one high-power rectifier **1826A** while handling the same amount of power. In some embodiments, the total power handled by rectifier **1826A** can be combined into one DC-DC converter **1828A.** In other embodiments, there may a DC-DC converter **1828A** per rectifier **1826A.**

### 2. Multiple Antenna Elements Connected in Parallel to a Rectifier

**FIG. 18B** illustrates an arrangement **1800B** where multiple antenna elements **1824B** may be connected in parallel to a rectifier **1826B,** after which DC voltage may be regulated through a DC-DC converter **1828B.** In this example, four antenna elements **1824B** may be connected in parallel to a single rectifier **1826B.** Arrangement **1800B** may be advantageous because each antenna element **1824B** may only handle 1/4 of the total power. In addition, arrangement **1800B** may enable usage of antenna element **1824B** of different polarizations with a single rectifier **1826B** because signals may not cancel each other. Because of the foregoing property, arrangement **1800B** may be suitable for electronic devices with an orientation that is not well-defined or otherwise varies over time. Lastly, arrangement **1800B** may be beneficial when using antenna element **1824B** of equal polarization and configured for phases that do not differ greatly. In some embodiments, however, there can be a rectifier **1826B** per antenna element **1824B** or multiple rectifiers **1826B** (as described in **FIG. 18A**) per antenna element **1824B.**

### 3. Multiple Antenna Elements Connected in Parallel to Multiple Rectifiers

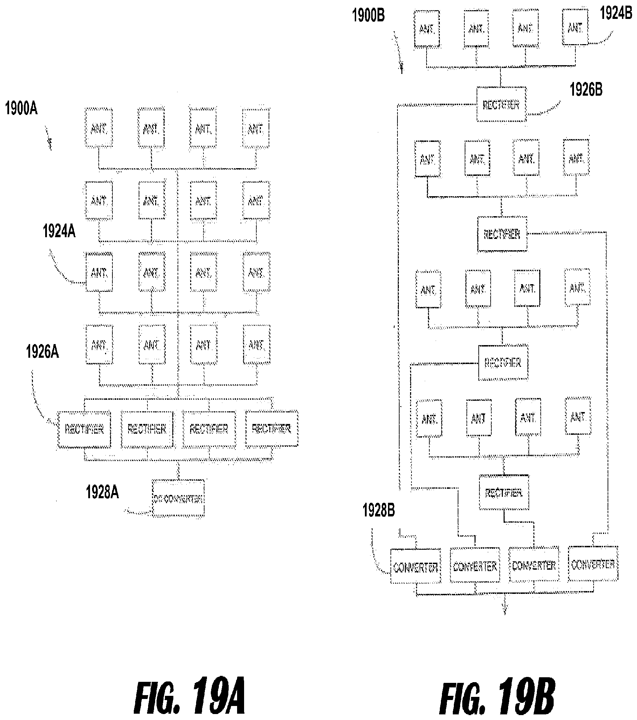

**FIG. 19A** illustrates an arrangement **1900A** where multiple antenna elements **1924A** outputs can be combined and connected to parallel rectifier **1926A** whose output may further be combined in one DC converter **1928A.** Arrangement **1900A** shows, by way of exemplification, 16 antenna elements **1924A** whose output may be combined at four parallel rectifiers **1926A.** In other embodiments, antenna elements **1924A** may be subdivided in groups (e.g., four groups) and may connect to independent rectifiers as shown in **FIG. 19B** below.

### 4. Permutations of Groupings

**FIG. 19B** illustrates an arrangement **1900B** where groups of antenna elements **1624B** may be connected to different rectifiers **1926B,** which may in turn also be connected to different DC converters **1928B.** In arrangement **1900B,** four groups of antenna elements **1924B** (each containing four antenna elements **1924B** in parallel) may each connect independently to four rectifiers **1926B.** In this embodiment, the output of each rectifiers **1926B** may connect directly to a DC converter **1928B** (four in total). In other embodiments, the output of all four rectifiers **1926B** can be combined, before each DC converter **1928B,** to handle the total power in parallel. In other embodiments, the combined outputs of each rectifier **1926B** may connect to a single DC converter **1928B.** Arrangement **1900B** may be beneficial in that it allows great proximity between rectifier **1926B** and antenna element **1924B.** This property may be desirable as it may keep losses at a minimum.

A receiver may be implemented on, connected to or embedded in electronic devices or equipment that may rely on power for performing its intended functions, for example a phone, laptop computer, a television remote, a children's toys or any other such devices. A receiver utilizing pocket-forming can be used to fully charge a device's battery while being "On" or "Off," or while being used or not. In addition, battery lifetime can be greatly enhanced. For example, a device operating on two watts utilizing a receiver that may deliver one watt may increase its battery duration up to about 50%. Lastly, some devices currently running on batteries can fully be powered using a receiver after which a battery may no longer be required. This last property may be beneficial for devices where replacing batteries can be tedious or hard to accomplish such as in wall-clocks. Embodiments below provide some examples of how integration of receivers may be carried out on electronic devices.

### 5. Embedded Receiver

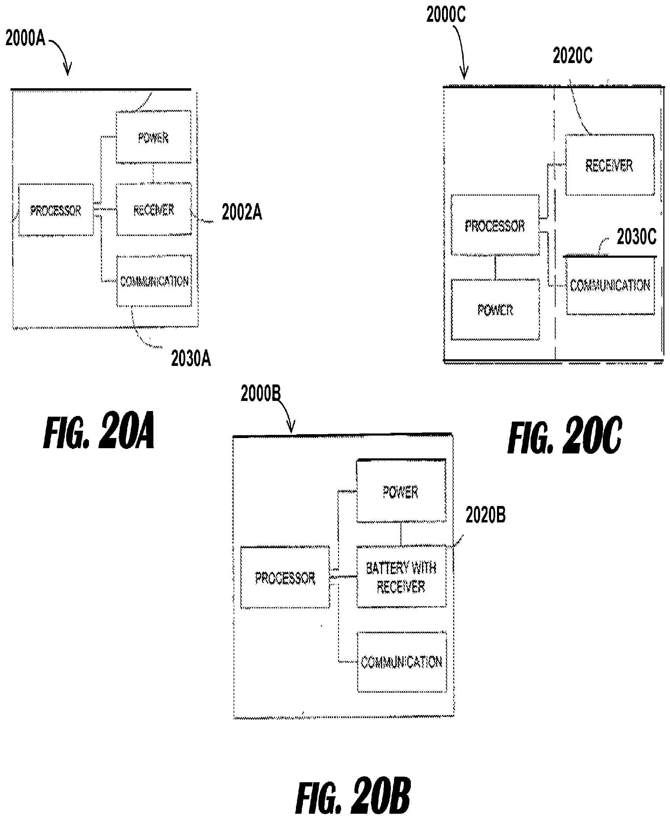

**FIG. 20A** illustrates an implementation scheme where a device **2000A** that may represent a typical phone, computer or other electronic device may include an embedded receiver **2020A.** Device **2000A** may also include a power source, a communications component **2030A,** and a processor. Receiver **2020A** way utilize pocket-forming for providing power to power source from device **2000A.** In addition, receiver **2020A** can use built-in communications component **2030A** of device **2000A** (for example, Bluetooth) for communicating to a given transmitter based on requirements provided by processor such as battery level, user predefined charging profile or others.

### 6. Battery with an embedded receiver

**FIG. 20B** illustrates another implementation scheme where a device **2000B** may include a battery with an embedded receiver **2020B.** Battery may receive power wirelessly through pocket-forming and may charge through its embedded receiver **2020B.** Battery may function as a supply for power source, or may function as back-up supply. This configuration may be advantageous in that battery may not need to be removed for charging. This may particularly be helpful in gaming controllers, or gaming devices where batteries, typically AA or AAA may be continuously replaced.

### 7. External Communication Component

**FIG. 20C** illustrates an alternate implementation scheme **2000C** where receiver **2020C** and a communications component **2030C** may be included in an external hardware that may be attached to a device. Hardware can take appropriate forms such as cases that may be placed on phones, computers, remote controllers and others, which may connect thorough suitable interfaces such as Universal Serial Bus (USB). In other embodiments, hardware may be printed on flexible films, which may then be pasted or otherwise attached to electronic equipment. This option may be advantageous as it may be produced at low cost and can easily be integrated into various devices. As in previous embodiments, a communications component **2030C** may be included in hardware that may provide communication to a transmitter or to electronic equipment in general.

### 8. Casing or Housing of Receiver connecting to USB

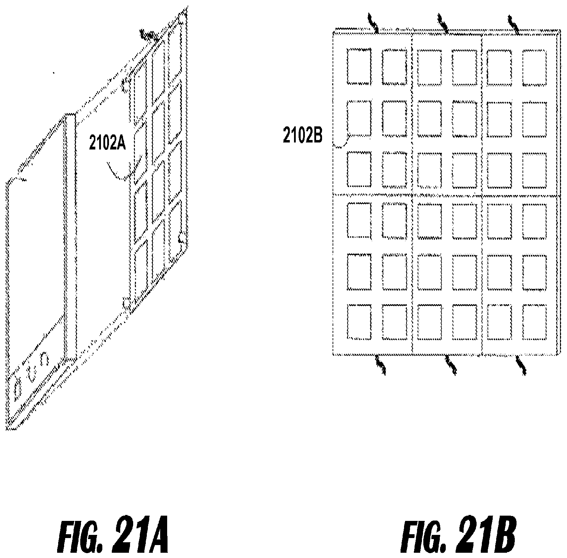

**FIG. 21A** illustrates hardware in the form of case including a receiver **2102A** that may connect through flex cables or USB to a smartphone and/or any other electronic device. In other embodiments, the housing or case can be a computer case, phone case, and/or camera case among other such options.

### 9. PCB on Printed Film

**FIG. 21B** illustrates hardware in the form of a printed film or flexible printed circuit board (PCB) which may include a plurality of printed receivers **2102B.** Printed film can be pasted or otherwise attached to electronic devices and can connect trough suitable interfaces such as USB. Printed film may he advantageous in that sections can be cut from it to meet specific electronic device sizes and/or requirements. The efficiency of wireless power transmission as well as the amount of power that can be delivered (using pocket-forming) may be a function of the total number of antenna elements used in a given receiver and transmitter system. For example, for delivering about one watt at about 15 feet, a receiver may include about 80 antenna elements while a transmitter may include about 256 antenna elements. Another identical wireless power transmission system (about 1 watt, at about 15 feet) may include a receiver with about 40 antenna elements, and a transmitter with about 512 antenna elements. Reducing in half the number of antenna elements in a receiver may require doubling the number of antenna elements in a transmitter. In some cases, it may be cost-effective to put a greater number of antenna elements in a transmitter than in a receiver. However, the opposite can be achieved by placing more antenna elements on a receiver than on a transmitter, as long as there are at least two antenna elements in a transmitter.

### IV. ANTENNA HARDWARE AND FUNCTIONALITY

### A. Spacing Configuration

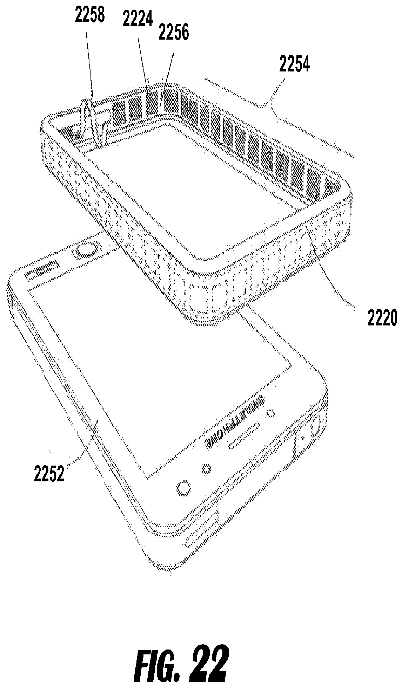

**FIG. 22** illustrates internal hardware, where receiver **2220** may be used for receiving wireless power transmission in an electronic device **2252** (e.g., smartphone). In some implementations, the electronic device **2252** may include receiver **2220,** which may be embedded around the internal edge of the case **2254** (e.g., smartphone case) of the electronic device **2252.** In other embodiments, the receiver **2220** may be implemented covering the back side of the case **2254.** The case **2254** may be one or more of: a smartphone cover, a laptop cover, camera cover, GPS cover, a game controller cover and/or tablet cover, among other such options. The case **2254** may be made out of plastic, rubber and/or any other suitable material.

Receiver **2220** may include an array of antenna elements **2224** strategically distributed on the grid area shown in **FIG. 22****.** The case **2254** may include an array of antenna elements **2224** located around the edges and/or along the backside of case **2254** for optimal reception. The number, spacing, and type of antenna elements **2224** may be calculated according to the design, size, and/or type of electronic device **2252.** In some embodiments, there may be a spacing (e.g., 1mm-4mm) and/or a meta-material between the case **2254** containing the antenna element **2224** and the electronic device **2252.** The spacing and/or meta-material may provide additional gain for RF signals. In some implementations, the meta-materials may be used in creating a multi-layer PCB to implement into the case **2254.**

### B. Metamaterial

The internal hardware may be in the form of a printed film **2256** and/or flexible PCB may include different components, such as a plurality of printed antenna elements **2224** (connected with each other in serial, parallel, or combined), rectifier, and power converter elements. Printed film **2256** may be pasted or otherwise attached to any suitable electronic devices, such as electronic device **2252** and/or tablets. Printed film **2256** may be connected through any suitable interfaces such as flexible cables **2258.** Printed film **2256** may exhibit some benefits; one of those benefits may be that sections can be cut from it to meet specific smart mobile device sizes and/or requirements. According to one embodiment, the spacing between antenna elements **2224** for receiver **2220** may range from about 2 nm to about 12 nm, being most suitable about 7 nm.

Additionally, in some implementations, the optimal amount of antenna elements **2224** that may be used in receiver **2220** for an electronic device **2252** such as a smartphone may range from about 20 to about 30. However, the amount of antenna elements **2224** within receiver **2220** may vary according to electronic device **2252** design and size. Antenna element **2224** may be made of different conductive materials such as cooper, gold, and silver, among others. Furthermore, antenna element **2224** may be printed, etched, or laminated onto any suitable non-conductive flexible substrate, such as flexible PCB, among others. The disclosed configuration and orientation of antenna element **2224** may exhibit a better reception, efficiency, and performance of wireless charging.

The foregoing method descriptions and the process flow diagrams are provided merely as illustrative examples and are not intended to require or imply that the steps of the various embodiments must be performed in the order presented. As will be appreciated by one of skill in the art the steps in the foregoing embodiments may be performed in any order. Words such as "then," "next," and the like, are not intended to limit the order of the steps; these words are simply used to guide the reader through the description of the methods. Although process flow diagrams may describe the operations as a sequential process, many of the operations can be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module that may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product. The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

## Claims

1. A method of wirelessly transmitting power using radio frequency, RF, waves, the method comprising:
at a RF wireless power transmitter comprising an antenna array:
receiving, by a first subset of antennas of the antenna array, a first signal from a wireless power receiver;
receiving, by a second subset of antennas of the antenna array, a second signal from the wireless power receiver, wherein (i) the second subset of antennas includes at least one antenna not included in the first subset of antennas and (ii) the first and second subsets of antennas are configured to allow determination of horizontal and vertical coordinates of wireless power receivers; **characterised by** the following steps;
based on an analysis of the first and second signals to determine horizontal and vertical coordinates, respectively, representing a location of the wireless power receiver, determining, by the controller, respective transmission features for RF power transmission waves that cause the RF power transmission waves to constructively interfere around the location of the wireless power receiver when transmitted by the antenna array; and
after determining the respective transmission features based on the analysis of the first and second signals, transmitting, by the antenna array, RF power transmission waves having the determined transmission features, the RF power transmission waves constructively interfering around the location of the wireless power receiver, thereby forming a pocket of energy.

2. The method of claim 1, wherein the first subset of antennas is substantially perpendicular to the second subset of antennas within the antenna array.

3. The method of claim 1, wherein the first subset of antennas is a row of antennas and the second subset of antennas is a column of antennas.

4. The method of claim 1, wherein:
the horizontal coordinate representing the location of the wireless power receiver is an azimuth value in a spherical coordinate system; and
the vertical coordinate representing the location of the wireless power receiver is an elevation value in the spherical coordinate system.

5. The method of claim 4, wherein:
the transmission features include phase and gain; and
determining the transmission features includes:
determining a phase at which to transmit the power transmission waves based on the horizontal coordinate; and
determining a gain with which to transmit the power transmission waves based on the vertical coordinate.

6. The method of claim 5, wherein transmitting the power transmission waves having the determined transmission features includes transmitting the power transmission waves at the determined phase and with the determined gain so that the power transmission waves constructively interfere around the location of the wireless power receiver.

7. The method of claim 1, wherein the transmission features for the power transmission waves are further determined using previously stored data about the antenna array.

8. The method of claim 1, further comprising, at the wireless power transmitter, saving the determined transmission features for the power transmission waves, wherein the saved transmission features are used to determine future transmission features.

9. The method of claim 1, wherein the power transmission waves are radio frequency power transmission waves.

10. The method of claim 1, wherein the power transmission waves are selected from the group consisting of: electromagnetic waves, radio frequency waves, microwaves, sound waves, and ultrasonic waves.

11. The method of claim 1, wherein the first and second subsets of antennas have at least one common antenna.

12. The method of claim 1, wherein the antenna array includes additional antennas that are distinct and separate from antennas in the first and second subsets of antennas.

13. The method of claim 1, wherein transmitting the power transmission waves having the determined transmission features comprises transmitting at least one power transmission wave having the determined transmission features at each antenna of the antenna array.

14. A RF wireless power transmitter configured to perform the method of any one of claims 1-13.

15. A non-transitory computer-readable storage medium, storing one or more programs configured for execution by one or more processors of a wireless power transmitter comprising an antenna array, the one or more programs including instructions that, when executed by the one or more processors, cause the wireless power transmitter to perform the method of any one of claims 1-13.

## Patentansprüche

1. Verfahren zum drahtlosen Übertragen von Leistung unter Verwendung von Radiofrequenz(RF)-Wellen, wobei das Verfahren Folgendes umfasst:
an einem drahtlosen RF-Leistungsüberträger mit einer Antennenanordnung:
Empfangen, durch eine erste Teilmenge von Antennen der Antennenanordnung, eines ersten Signals von einem drahtlosen Leistungsempfänger;
Empfangen, durch eine zweite Teilmenge von Antennen der Antennenanordnung, eines zweiten Signals von dem drahtlosen Leistungsempfänger, wobei (i) die zweite Teilmenge von Antennen mindestens eine Antenne einschließt, die nicht in der ersten Teilmenge von Antennen eingeschlossen ist, und (ii) die erste und zweite Teilmenge von Antennen konfiguriert sind, um das Bestimmen von horizontalen und vertikalen Koordinaten von drahtlosen Leistungsempfängern zu ermöglichen;
**gekennzeichnet durch** die folgenden Schritte; basierend auf einer Analyse des ersten und zweiten Signals, um horizontale bzw. vertikale Koordinaten zu bestimmen, die jeweils einen Standort des drahtlosen Leistungsempfängers darstellen, Bestimmen, durch die Steuerung, von entsprechenden Übertragungsmerkmalen für RF-Leistungsübertragungswellen, die bewirken, dass die RF-Leistungsübertragungswellen konstruktiv um den Standort des drahtlosen Leistungsempfängers herum interferieren, wenn sie von der Antennenanordnung übertragen werden; und
nach dem Bestimmen der jeweiligen Übertragungsmerkmale basierend auf der Analyse des ersten und zweiten Signals, Übertragen, durch die Antennenanordnung, von RF-Leistungsübertragungswellen mit den bestimmten Übertragungsmerkmalen, wobei die RF-Leistungsübertragungswellen konstruktiv um den Standort des drahtlosen Leistungsempfängers herum interferieren und dadurch eine Energietasche bilden.

2. Verfahren nach Anspruch 1, wobei die erste Teilmenge von Antennen im Wesentlichen senkrecht zur zweiten Teilmenge von Antennen innerhalb der Antennenanordnung steht.

3. Verfahren nach Anspruch 1, wobei die erste Teilmenge der Antennen eine Reihe von Antennen ist und die zweite Teilmenge der Antennen eine Spalte von Antennen ist.

4. Verfahren nach Anspruch 1, wobei:
die horizontale Koordinate, die den Standort des drahtlosen Leistungsempfängers darstellt, ein Azimutwert in einem sphärischen Koordinatensystem ist; und
die vertikale Koordinate, die den Standort des drahtlosen Leistungsempfängers darstellt, ein Höhenwert im sphärischen Koordinatensystem ist.

5. Verfahren nach Anspruch 4, wobei:
die Übertragungseigenschaften Phase und Verstärkung einschließen; und
das Bestimmen der Übertragungseigenschaften Folgendes einschließt:
Bestimmen einer Phase, in der die Leistungsübertragungswellen basierend auf der horizontalen Koordinate übertragen werden; und
Bestimmen einer Verstärkung, mit der die Leistungsübertragungswellen basierend auf der vertikalen Koordinate übertragen werden.

6. Verfahren nach Anspruch 5, wobei das Übertragen der Leistungsübertragungswellen mit den bestimmten Übertragungseigenschaften das Übertragen der Leistungsübertragungswellen in der bestimmten Phase und mit der bestimmten Verstärkung einschließt, so dass die Leistungsübertragungswellen konstruktiv um den Standort des drahtlosen Leistungsempfängers herum interferieren.

7. Verfahren nach Anspruch 1, wobei die Übertragungsmerkmale für die Leistungsübertragungswellen ferner unter Verwendung zuvor gespeicherter Daten über die Antennenanordnung bestimmt werden.

8. Verfahren nach Anspruch 1, ferner umfassend, an dem drahtlosen Leistungsüberträger, das Speichern der bestimmten Übertragungsmerkmale für die Leistungsübertragungswellen, wobei die gespeicherten Übertragungsmerkmale verwendet werden, um zukünftige Übertragungsmerkmale zu bestimmen.

9. Verfahren nach Anspruch 1, wobei die Leistungsübertragungswellen Radiofrequenz-Leistungsübertragungswellen sind.

10. Verfahren nach Anspruch 1, wobei die Leistungsübertragungswellen ausgewählt sind aus der Gruppe bestehend aus: elektromagnetischen Wellen, Radiofrequenzwellen, Mikrowellen, Schallwellen und Ultraschallwellen.

11. Verfahren nach Anspruch 1, wobei die erste und zweite Teilmenge von Antennen mindestens eine gemeinsame Antenne aufweist.

12. Verfahren nach Anspruch 1, wobei die Antennenanordnung zusätzliche Antennen einschließt, die sich von Antennen in der ersten und zweiten Teilmenge von Antennen unterscheiden und von diesen getrennt sind.

13. Verfahren nach Anspruch 1, wobei das Übertragen der Leistungsübertragungswellen mit den bestimmten Übertragungsmerkmalen das Übertragen mindestens einer Leistungsübertragungswelle mit den bestimmten Übertragungsmerkmalen an jeder Antenne der Antennenanordnung umfasst.

14. Drahtloser RF-Radioleistungsüberträger, der konfiguriert ist, um das Verfahren nach einem der Ansprüche 1-13 durchzuführen.

15. Nichtflüchtiges, computerlesbares Speichermedium, das ein oder mehrere Programme speichert, die zur Ausführung durch einen oder mehrere Prozessoren eines drahtlosen Leistungsüberträgers mit einer Antennenanordnung konfiguriert sind, wobei das eine oder die mehreren Programme Anweisungen enthalten, die, wenn sie von einem oder mehreren Prozessoren ausgeführt werden, den drahtlosen Leistungsüberträger veranlassen, das Verfahren nach einem der Ansprüche 1-13 durchzuführen.

## Revendications

1. Procédé de transmission d'énergie sans fil en utilisant des ondes de radiofréquence, RF, le procédé comprenant les étapes consistant :
au niveau d'un émetteur d'énergie sans fil RF comprenant un réseau d'antennes :
à recevoir, par un premier sous-ensemble d'antennes du réseau d'antennes, un premier signal à partir d'un récepteur d'énergie sans fil ;
à recevoir, par un deuxième sous-ensemble d'antennes du réseau d'antennes, un deuxième signal à partir du récepteur d'énergie sans fil, où (i) le deuxième sous-ensemble d'antennes comporte au moins une antenne non incluse dans le premier sous-ensemble d'antennes et (ii) les premier et deuxième sous-ensembles d'antennes sont configurés pour permettre la détermination des coordonnées horizontales et verticales de récepteurs d'énergie sans fil ; **caractérisé par** les étapes suivantes consistant ;
sur la base d'une analyse des premier et deuxième signaux pour déterminer les coordonnées horizontales et verticales, respectivement, à représenter un emplacement du récepteur d'énergie sans fil, à déterminer, par l'unité de commande, les caractéristiques de transmission respectives pour les ondes de transmission d'énergie RF qui amènent les ondes de transmission d'énergie RF à interférer de manière constructive autour de l'emplacement du récepteur d'énergie sans fil lorsqu'elles sont transmises par le réseau d'antennes ; et
après la détermination des caractéristiques de transmission respectives sur la base de l'analyse des premier et deuxième signaux, à transmettre, par le réseau d'antennes, des ondes de transmission d'énergie RF ayant les caractéristiques de transmission déterminées, les ondes de transmission d'énergie RF interfèrent de manière constructive autour de l'emplacement du récepteur d'énergie sans fil, formant ainsi une poche d'énergie.

2. Procédé de la revendication 1, dans lequel le premier sous-ensemble d'antennes est essentiellement perpendiculaire au deuxième sous-ensemble d'antennes dans le réseau d'antennes.

3. Procédé de la revendication 1, dans lequel le premier sous-ensemble d'antennes est une rangée d'antennes et le deuxième sous-ensemble d'antennes est une colonne d'antennes.

4. Procédé de la revendication 1, dans lequel :
la coordonnée horizontale représentant l'emplacement du récepteur d'énergie sans fil est une valeur de l'azimut dans un système de coordonnées sphériques ; et
la coordonnée verticale représentant l'emplacement du récepteur d'énergie sans fil est une valeur d'altitude dans le système de coordonnées sphériques.

5. Procédé de la revendication 4, dans lequel :
les caractéristiques de transmission comportent une phase et un gain ; et
la détermination des caractéristiques de transmission comporte :
la détermination d'une phase à laquelle les ondes de transmission d'énergie sont transmises sur la base de la coordonnée horizontale ; et
la détermination d'un gain avec lequel les ondes de transmission d'énergie sont transmises sur la base de la coordonnée verticale.

6. Procédé de la revendication 5, dans lequel la transmission des ondes de transmission d'énergie ayant les caractéristiques de transmission déterminées comporte la transmission des ondes de transmission d'énergie à la phase déterminée et avec le gain déterminé, de sorte que les ondes de transmission d'énergie interfèrent de manière constructive autour de l'emplacement du récepteur d'énergie sans fil.

7. Procédé de la revendication 1, dans lequel les caractéristiques de transmission pour les ondes de transmission d'énergie sont en outre déterminées en utilisant des données précédemment stockées concernant le réseau d'antennes.

8. Procédé de la revendication 1, comprenant en outre, au niveau de l'émetteur d'énergie sans fil, l'étape consistant à sauvegarder les caractéristiques de transmission déterminées pour les ondes de transmission d'énergie, où les caractéristiques de transmission sauvegardées sont utilisées pour déterminer les caractéristiques de transmission futures.

9. Procédé de la revendication 1, dans lequel les ondes de transmission d'énergie sont des ondes de transmission d'énergie de radiofréquence.

10. Procédé de la revendication 1, dans lequel les ondes de transmission d'énergie sont choisies dans le groupe consistant en : des ondes électromagnétiques, des ondes de radiofréquence, des micro-ondes, des ondes sonores et des ondes ultrasonores.

11. Procédé de la revendication 1, dans lequel les premier et deuxième sous-ensembles d'antennes ont au moins une antenne commune.

12. Procédé de la revendication 1, dans lequel le réseau d'antennes comporte des antennes supplémentaires qui sont distinctes et séparées des antennes dans les premier et deuxième sous-ensembles d'antennes.

13. Procédé de la revendication 1, dans lequel la transmission des ondes de transmission d'énergie ayant les caractéristiques de transmission déterminées comprend la transmission d'au moins une onde de transmission d'énergie ayant les caractéristiques de transmission déterminées au niveau de chaque antenne du réseau d'antennes.

14. Émetteur d'énergie sans fil RF configuré pour effectuer le procédé de l'une quelconque des revendications 1 à 13.

15. Support de stockage non transitoire lisible par ordinateur, stockant un ou plusieurs programme(s) configuré(s) pour être exécuté(s) par un ou plusieurs processeur(s) d'un émetteur d'énergie sans fil comprenant un réseau d'antennes, le ou les plusieurs programme(s) comportant des instructions qui, lorsqu'elles sont exécutées par le ou les plusieurs processeur(s), amènent l'émetteur d'énergie sans fil à effectuer le procédé de l'une quelconque des revendications 1 à 13.
